# EUROPEAN PATENT APPLICATION

(11) **EP 1 486 772 A1**
(43) Date of publication of application: **15.12.2004**
(21) Application number: 03708600.6
(22) Date of filing: 14.03.2003
(51) Int. Cl.: G01N 21/67

(54) **METAL IDENTIFYING DEVICE AND METAL IDENTIFYING METHOD**

(30) Priority: 15.03.2002 JP 2002071873; 16.04.2002 JP 2002112991
(71) Applicant: MATSUSHITA ELECTRIC INDUSTRIAL CO., LTD., Kadoma-shi, Osaka 571-8501 (JP)
(72) Inventor: IRIE, Shouichi, Toyonaka-shi, Osaka 561-0881 (JP); HISAZUMI, Takao, Ibaraki-shi, Osaka 567-0025 (JP); ARAKI, Norie, Mishima-gun, Osaka 618-0011 (JP); NAGASHIMA, Takashi, Kyoto-shi, Kyoto 612-8487 (JP)
(74) Representative: VOSSIUS & PARTNER
(86) International application number: PCT/JP2003/003054
(87) International publication number: WO 2003/078985

(57) **Abstract**

A metal identification device of the present invention is characterized in that it includes an arc discharge device including a discharge electrode for causing a discharge between itself and an object to be identified so as to excite the object to be identified and cause it to emit light, an optic fiber for gathering light that has been emitted by the arc discharge device, a spectrophotometer for measuring an emission spectrum of the light that has been gathered by the optic fiber, a personal computer serving as an identification processing portion for identifying a type of the object to be identified by comparing data of the emission spectrum measured by the spectrophotometer and emission spectrum data of a plurality of standard samples stored in advance, and a damage processing portion for damaging at least some of the surface of the object to be identified.

## Description

### Technical Field

The present invention relates to metal identification devices and metal identification methods for identifying metal used in manufactured products that are to be processed when processing used household electronic appliances, for example.

### Background Art

In recent years, the push toward protecting the environment, preventing pollution, and reusing available resources has spurred a demand for appropriate processing of used household electronic appliances, for example.

For example, magnesium is lightweight and durable and also can be ejection molded. Thus in recent years magnesium has found increasingly wide application due to its versatility and has been produced and used in increasingly greater quantities. This has also led to a concurrent increase in the amount of magnesium that is disposed. Magnesium's high reactivity makes it prone to burning, and high concentrations of magnesium dust have the risk of causing a dust explosion. Consequently, when magnesium is mixed among ordinary waste material and crushed with a crushing device, there was the risk of explosion.

Also, metals such as iron, copper, and aluminum, which if salvaged separately can be reduced effectively as raw material, often were crushed together without being separated, resulting in a mixed metal that was processed as scrap iron. In some instances, such mixed metals were disposed of as waste landfill material, and this invited such societal problems as the negative impact on the global environment and the inadequacy of landfill sites.

For the above reasons, it is crucial that when processing used household electronic appliances and the like, the types of metal that are used in the manufactured products are identified and salvaged separately before they are crushed together. Conventionally, the identification of different metal types was limited to the use of magnetic force and eddy current to separate iron and aluminum, and magnesium, for example, could not be separated from other nonferrous metals using a simply executed method. Also, x-ray diffraction, in which x-rays are employed to assay crystalline structures, is known as one method for assaying the type of a metal with high precision. However, this method is not suited for use at actual processing sites because it employs x-rays, which are harmful to the human body.

Consequently, to separate metals with high precision at processing sites, it was necessary to use such methods as disassembling the manufactured product to be processed and confirming the type of metal by the manufacture number or markings, or shaving away some of the manufactured product and using an emission spectrophotometer to analyze it slowly.

However, the method for confirming metals using their manufacture number, for example, was very time consuming, and thus there was the problem that in practice this method was difficult to adopt for all manufactured products at an actual processing site. Also, in the case of the assaying method using an emission spectrophotometer, household electronic appliances often include a film (in particular, an insulating film) such as a painted film, rust, or dirt, formed on their metal surfaces, and the presence of these insulating films made it difficult to excite the metal and cause it to emit light.

### Disclosure of the Invention

A metal identification device of the present invention is characterized in that it includes a light emitting portion including a first electrode for causing a discharge between itself and an object to be identified so as to excite the object to be identified and cause it to emit light, a light gathering portion for gathering the light emitted by the light emitting portion, a spectrometry portion for measuring an emission spectrum of the light that has been gathered by the light gathering portion, an identification processing portion for identifying the object to be identified by comparing data of the emission spectrum measured by the spectrometry portion and emission spectrum data of a plurality of standard samples stored in advance, and a damage processing portion for damaging at least some of the surface of the object to be identified.

A metal identification method of the present invention is characterized in that it is a method for identifying a type of a metal of an object to be identified by damaging at least a portion of a surface of the object to be identified, then exciting the object to be identified and making it emit light and measuring the emission spectrum of the object to be identified, and comparing data of the emission spectrum of the object to be identified and emission spectrum data of a plurality of samples stored in advance.

### Brief Description of the Drawings

FIG. 1 is a perspective view showing how the object to be identified is identified using the metal identification device according to the first embodiment of the present invention.
FIG. 2 is a cross-sectional view taken along the line I-I of the arc discharge device shown in FIG. 1.
FIG. 3 is a cross-sectional view showing a state where the arc discharge device shown in FIG. 2 is in contact with the object to be identified.
FIG. 4 is a cross-sectional view showing an example of the shape of the opposing electrode of the arc discharge device.
FIG. 5 is a block diagram of the metal identification device of the first embodiment of the present invention.
FIG. 6 is a flowchart showing the metal identification process of the metal identification device of the first embodiment of the present invention.
FIG. 7 is a perspective view showing how the object to be identified is identified using the metal identification device according to the second embodiment of the present invention.
FIG. 8 is a lateral view showing how the object to be identified is identified using the metal identification device according to the second embodiment of the present invention.
FIG. 9 is a lateral view showing a cutter used as the defect providing member.
FIG. 10 is a lateral view showing a needle used as the defect providing member.
FIG. 11 is a block diagram of the metal identification device according to the second embodiment of the present invention.
FIG. 12 is a flowchart showing the metal identification process of the metal identification device of the second embodiment of the present invention.
FIG. 13 is a perspective view showing how the object to be identified is identified using the metal identification device according to the third embodiment of the present invention.
FIG. 14 is a cross-sectional view taken along the line II-II of the arc discharge device shown in FIG. 13.
FIG. 15 is a cross-sectional view showing a state where the arc discharge device shown in FIG. 14 is in contact with the object to be identified.
FIG. 16 is a perspective view showing how the object to be identified is identified using the metal identification device according to the fourth embodiment of the present invention.
FIG. 17 is a block diagram of the metal identification device according to the fourth embodiment of the present invention.
FIG. 18 is a flowchart showing the metal identification process of the metal identification device of the fourth embodiment of the present invention.
FIG. 19 is a block diagram of the metal identification device according to the fifth embodiment of the present invention.
FIG. 20 is a flowchart showing the metal identification process of the metal identification device of the fifth embodiment of the present invention.
FIG. 21 is a block diagram of the metal identification device according to the sixth embodiment of the present invention.
FIG. 22 is a graph showing the relationship between the insulating film thickness and the breakdown voltage.
FIG. 23 is a cross-sectional view showing the mechanism for controlling the position of the discharge electrode.
FIG. 24 is a flowchart showing the metal identification process of the metal identification device of the sixth embodiment of the present invention.
FIG. 25 is a block diagram of the metal identification device according to the seventh embodiment of the present invention.
FIG. 26 is a cross-sectional view showing the mechanism for controlling the position of the optic fiber.
FIG. 27 is a flowchart showing the metal identification process of the metal identification device of the seventh embodiment of the present invention.
FIG. 28 is a perspective view showing how the object to be identified is identified using the metal identification device according to the eighth embodiment of the present invention.
FIG. 29 is a cross-sectional view showing how the discharge electrode is cleaned.
FIG. 30 is a block diagram of the metal identification device according to the eighth embodiment of the present invention.
FIG. 31 is a flowchart showing the metal identification process of the metal identification device of the eighth embodiment of the present invention.
FIG. 32 is a block diagram showing how the object to be identified is identified using the metal identification device according to the ninth embodiment of the present invention.
FIG. 33 is a flowchart showing the metal identification process of the metal identification device of the ninth embodiment of the present invention.
FIG. 34 is a flowchart showing the metal identification process of the metal identification device of the tenth embodiment of the present invention.
FIG. 35 is a block diagram of the metal identification device according to the eleventh embodiment of the present invention.
FIG. 36 is a flowchart showing the metal identification process of the metal identification device of the eleventh embodiment of the present invention.

### Best Mode for Carrying Out the Invention

With the metal identification device of the present invention, it is possible to damage at least a portion of the surface of the object to be identified, and therefore even if there is a film, and in particular an insulating film, on the surface of the object to be identified, discharge can be caused to excite the object to be identified and cause it to emit light. Thus, a type of a metal can be identified inexpensively and with ease even if the metal has an insulating film such as a painted film on its surface.

In the metal identification device of this invention, the light emission portion preferably further includes a first electrode for causing a discharge between itself and an object to be identified so as to excite the object to be identified and cause it to emit light, and a second electrode that is provided in such a manner that it contacts the object to be identified when the object to be identified is excited and emits light and that has a projection in its end portion. Also, the damage processing portion is preferably the projection of the second electrode. Accordingly, even if there is an insulating film, for example, on the surface of the object to be identified, due to the projection provided in the second electrode, the second electrode is able to reach the underlying metal portion through the insulating film. Consequently, the object to be identified can be set to a desired potential, and the potential difference between the object to be identified and the first electrode can be increased easily. As a result, even if the metal has an insulating film such as a painted film on its surface, the type of the metal can be identified easily and inexpensively.

In the metal identification device of the present invention, it is preferable that the second electrode includes at least two split electrodes having projections in their end portions, and that a conduction determination portion is further provided. The conduction determination portion determines whether there is conduction between the split electrodes. Therefore, whether the second electrode has arrived at the underlying metal portion of the object to be identified can be determined, and thus discharge can be caused more reliably.

In the metal identification device of the present invention, the second electrode can be used as a material that sets the distance between the first electrode and the object to be identified at a predetermined distance.

In the metal identification device of the present invention, it is preferable that the damage processing portion includes a defect providing member for providing a defect of a predetermined depth in at least a portion of a region of the surface of the object to be identified that is in opposition to the first electrode. The defect providing member also may be provided in a single unit with the light emitting portion. Thus, even if there is an insulating film on the surface of the object to be identified, the insulating film can be provided with a defect in advance to lower the breakdown voltage, which facilitates discharge and makes identification of the metal easier.

The metal identification device of the present invention further may include a needle-shaped electrode for applying a predetermined potential to the object to be identified, and that needle-shaped electrode may serve as the damage processing portion. Thus, even if there is an insulating film, for example, on the surface of the object to be identified, the needle-shaped electrode is able to reach the underlying metal portion through the insulating film, and therefore the object to be identified can be set to a desired potential. Accordingly, the potential difference between the object to be identified and the first electrode can be increased easily. As a result, even if the metal has an insulating film such as a painted film on its surface, the type of the metal can be identified easily and inexpensively.

In the metal identification device of the present invention, it is preferable that the light emitting portion further includes a cover made of an insulating material that sets a distance between the first electrode and the object to be identified to a predetermined distance and that is provided around the perimeter of the first electrode. This is to prevent discharge between the first electrode and metal other than that of the object to be identified, allowing discharge to be caused reliably between the first electrode and the object to be identified.

In the metal identification device of the present invention, the damage processing portion can be a pulse discharge circuit that causes a pulse discharge between the first electrode and the object to be identified, so as to remove at least a portion of a region of the surface of the object to be identified that is in opposition to the first electrode. In this case, it is preferable that there is also a film thickness measurement portion for measuring the thickness of the film adhered to the surface of the object to be identified and that an application voltage of the pulse discharge circuit is set in correspondence with the thickness of the film that is measured by the film thickness measurement portion. Thus, even if there is an insulating film, for example, on the surface of the object to be identified, that insulating film can be burned away in advance through the pulse discharge, allowing only the metal component of the object to be identified to be excited and made to emit light, and improving the identification precision.

The metal identification device of the present invention preferably further includes a film thickness measurement portion for measuring a thickness of a film adhered to the surface of the object to be identified, and a portion for controlling a distance between the first electrode and the object to be measured, for changing the distance between the first electrode and the object to be identified in correspondence with the film thickness of the film that is measured by the film thickness measurement portion. Even if there is an insulating film, for example, on the surface of the object to be identified and the insulating film is thick, the distance between the first electrode and the object to be identified can be appropriately selected to cause insulation breakdown in the insulating film and achieve discharge. Thus, the object to be identified can be made to emit light stably.

The metal identification device of the present invention preferably further includes a film thickness measurement portion for measuring a thickness of a film adhered to the surface of the object to be identified, and a portion for controlling a voltage between the first electrode and the object to be measured, for changing the voltage that is applied between the first electrode and the object to be identified in correspondence with the film thickness of the film that is measured by the film thickness measurement portion. Thus, even if there is an insulating film, for example, on the surface of the object to be identified and that insulating film is thick, the voltage between the first electrode and the object to be identified can be appropriately selected to cause insulation breakdown in the insulating film and achieve discharge. Therefore, the object to be identified can be made to emit light stably.

It is also preferable that the metal identification device of the present invention preferably further includes a light gathering portion position control portion for changing the position of the light gathering portion in correspondence with the distance between the first electrode and the object to be identified and/or the voltage that is applied between the first electrode and the object to be identified, which is/are set by the portion for controlling a distance between the first electrode and the object to be measured and/or the portion for controlling a voltage between the first electrode and the object to be measured. Since the light emission position changes due to a change in the position of the first electrode or a change in the application voltage, it is preferable that the position of the light gathering portion is also changed to match the change in the light emission position.

The metal identification device of the present invention preferably further includes a cleaning portion for removing substances adhered to the first electrode. This is because the metal cannot be identified accurately when an object to be identified that had been identified earlier has melted onto the first electrode.

It is also preferable that the cleaning portion further includes an air blower for removing substances adhered to the first electrode during discharge. Since the first electrode can be cleaned during discharge, the amount of time required for identification can be reduced.

In the metal identification device of the present invention, it is preferable that the identification processing portion includes a standard sample data storage portion for storing emission spectrum data of the standard samples, a measured data storage portion for storing data of the emission spectrum of the object to be identified that has been measured by the spectrometry portion, and a comparison and determination portion for comparing data of the emission spectrum of the object to be identified and the emission spectrum data of the standard samples, so as to determine a type of metal of the object to be identified. For example, it is preferable that the comparison and determination portion counts a number of matches between peak spectrum wavelengths of the emission spectrum of the object to be identified and peak spectrum wavelengths of the emission spectrum of each type of standard sample, and based on the results of this counting, identifies a type of metal of the object to be identified. More specifically, for example, it is preferable that the comparison and determination portion counts a number of matches between peak spectrum wavelengths of the emission spectrum of the object to be identified and peak spectrum wavelengths of the emission spectrum of each type of standard sample, determines a first standard sample with a highest number of matches, and determines that the metal of the object to be identified is the metal of the first standard sample. Thus, even if an object to be identified that was identified previously has melted and adhered to the first electrode, incorrect determinations can be kept from occurring if the type of the metal is determined based on the number of matches of peak spectrum wavelengths.

Also, in the case of assessing an alloy, it is possible for the comparison and determination portion to count a number of matches between peak spectrum wavelengths of the emission spectrum of the object to be identified and peak spectrum wavelengths of the emission spectrum of each type of standard sample, determine at least two multi-match standard samples whose number of matches is greater than other standard samples, and determine that the metal of the object to be identified is an alloy including the metals of the multi-match standard samples.

In the metal identification device of the present invention, it is preferable that the identification processing portion further includes a correction portion that calculates a value of a difference between the peak spectrum wavelengths of the emission spectrum obtained by measuring a reference metal and the peak spectrum wavelengths of the emission spectrum data of the reference metal stored in the standard sample data storage portion, and based on the value of the difference, creates emission spectrum correction data, and that the comparison and determination portion determines a type of metal of the object to be identified by comparing data of the emission spectrum of the object to be identified and the emission spectrum correction data, in place of the emission spectrum data stored in the standard sample data storage portion. This is because the peak spectrum wavelengths may vary due to fluctuations in the surrounding temperature, for example, and thus by correcting variation in the peak spectrum wavelengths, more accurate identification can be achieved.

In the metal identification device of the present invention, it is preferable that data of the emission spectrum of the object to be identified, which is measured a plurality of times at given time intervals, are stored in the measured data storage portion, and that the comparison and determination portion determines peak spectrum wavelengths that are attenuated over time from the plurality of data, and identifies the type of metal of the object to be identified excluding the peak spectrum wavelengths that are attenuated. This is to prevent inaccurate identification caused by the film.

In the metal identification device of the present invention, it is preferable that data of the emission spectrum of the object to be identified, which is measured a plurality of times at given time intervals, are stored in the measured data storage portion, that emission spectrum data of standard samples of different types of insulating films of the object to be identified are stored in the standard sample data storage portion, and that the comparison and determination portion determines peak spectrum wavelengths that are attenuated over time from the plurality of data stored in the measured data storage portion, determines the type of insulating film of the object to be identified from the peak spectrum wavelengths that are attenuated, and identifies the type of metal of the object to be identified using the emission spectrum data of the standard sample corresponding to the type of film of the object to be identified that has been determined. This is so that incorrect identification is prevented by using specific emission spectrum data for each type of film.

Also, according to the metal identification method of the present invention, the type of the metal of the object to be identified can be identified easily, even if there is an insulating film, for example, on the surface of the object to be identified.

In the metal identification method of the present invention, it is preferable that the type of metal of the object to be identified is identified by measuring the emission spectrum of the object to be identified a plurality of times at given time intervals, determining peak spectrum wavelengths of the emission spectrum that are attenuated over time, and comparing data of the emission spectrum of the object to be identified excluding the peak spectrum wavelengths that are attenuated over time and the emission spectrum data of the plurality of standard samples stored in advance. This is to prevent incorrect identification due to components in the film.

In the metal identification method of the present invention, it is preferable that the type of metal of the object to be identified is identified by measuring the emission spectrum of the object to be identified a plurality of at given time intervals, determining a type of film of the object to be identified from peak spectrum wavelengths of the emission spectrum that are attenuated over time, and comparing data of the emission spectrum of the object to be identified and the emission spectrum data of the plurality of standard samples stored in advance for the different film types. This is to prevent incorrect identification due to components in the film.

Hereinafter, embodiments of the present invention are described with reference to the drawings.

### First Embodiment

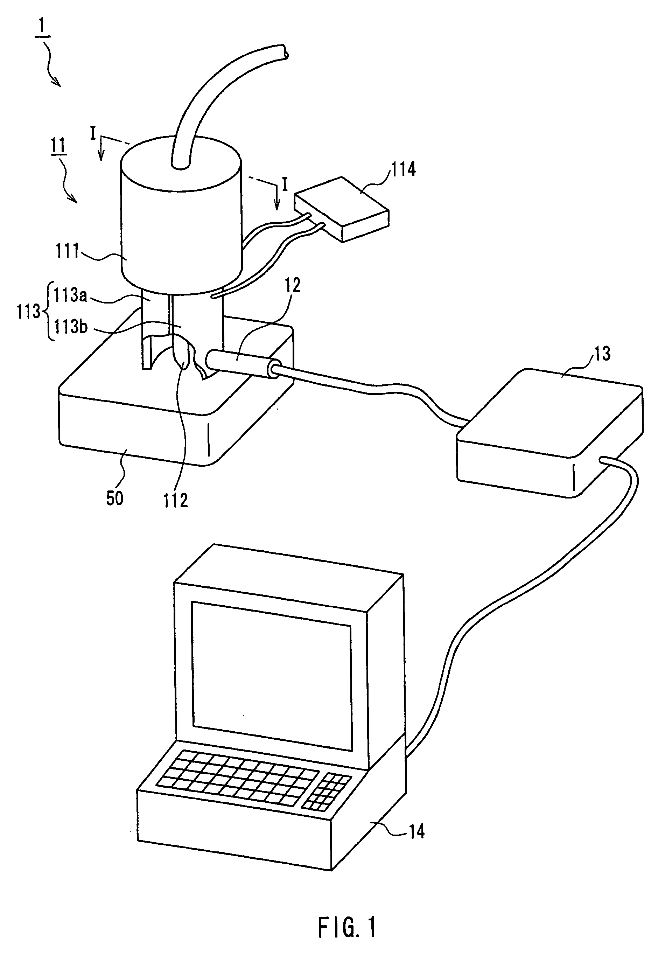

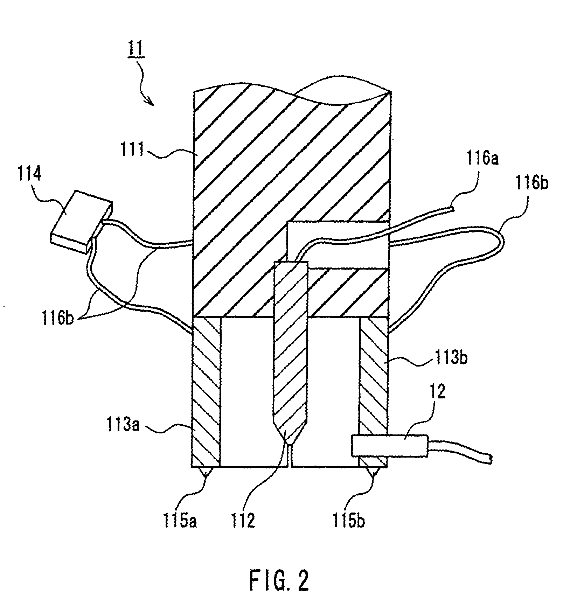

FIG. 1 shows how a metal identification device 1 according to a first embodiment of the present invention is used to identify an object to be identified 50. FIG. 2 is a cross-sectional view taken along line I-I in FIG. 1. The metal identification device 1 of this embodiment includes an arc discharge device (light emitting portion) 11, an optic fiber (light gathering portion) 12, a spectroscope (spectrometry portion) 13, and a personal computer (identification processing portion) 14. The metal identification device 1 also includes an image recognition device (not shown) for confirming the object to be identified 50, and a direct current power source (not shown) for supplying voltage to the arc discharge device 11.

The arc discharge device 11 is a device for exciting the object to be identified 50 and causing it to emit light by imparting energy to the object to be identified 50 through an arc discharge. The arc discharge device 11 is provided with a main unit portion 111, a discharge electrode (first electrode) 112 for causing an arc discharge between it and the object to be identified 50, and an opposing electrode (second electrode) 113 for grounding the object to be identified 50.

As shown in FIG. 2, the discharge electrode 112 is connected to the direct current power source (not shown) via a lead line 116a. A metal such as silver, copper, or tungsten can be used for forming the discharge electrode 112, and it is preferably silver, which has few peak spectrum wavelengths. For example, when correcting the emission spectrum in correspondence with the surrounding temperature or when confirming the presence of dirt on the discharge electrode 112, the emission spectrum of a sample (reference metal) of a single element serving as a reference is measured. The reference metal that is used in this case is preferably silver, as it has few peak spectrum wavelengths. Making the discharge electrode 112 the same metal as the reference metal allows the emission spectrum of metals other than the reference metal to be disregarded, and thus even more appropriate correction, for example, can be performed. For this reason, it is preferable that silver is used for the discharge electrode 112.

The opposing electrode 113 functions as a cover that is formed around the periphery of the discharge electrode 112 and keeps the gap between the object to be identified 50 and the discharge electrode 112 substantially constant during discharge. The opposing electrode 113 is split into halves (split electrodes 113a and 113b), and as shown in FIG. 2, projections (damage processing portions) 115a and 115b are provided at the end portions of the split electrodes 113a and 113b, respectively.

The arc discharge device 11 further is provided with a conduction determination device (conduction determination portion) 114 for determining whether there is conduction between the split electrodes 113a and 113b. The conduction determination device 114 is connected to both split electrodes 113a and 113b via a lead line 116b.

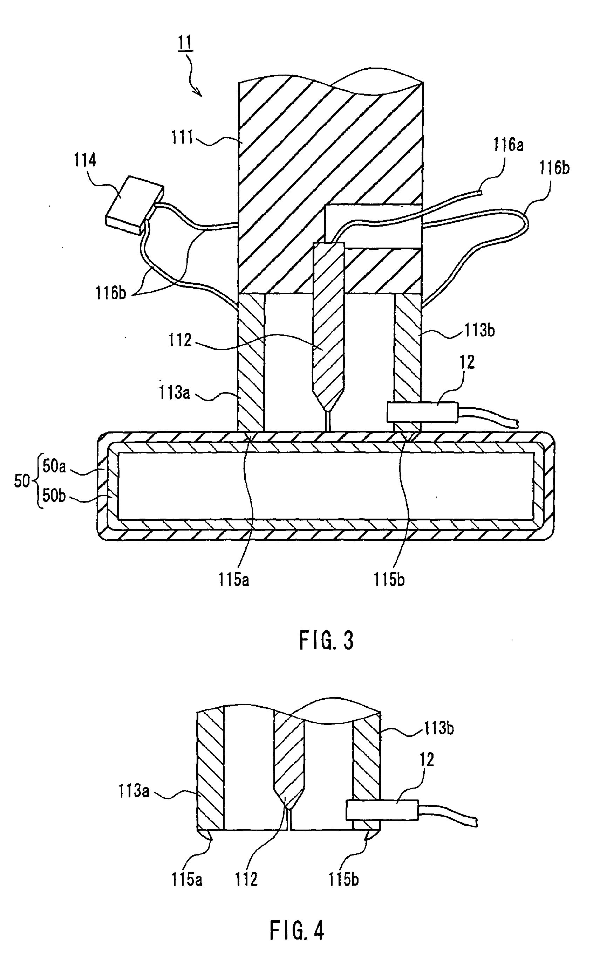

FIG. 3 shows the opposing electrodes 113 in contact with the object to be identified 50, with discharge being carried out between the discharge electrode 112 and the object to be identified 50. In the object to be identified 50, there is a film 50a made of a painted film, rust or dirt, for example, on the surface of a metal portion 50b. In this embodiment, the film 50a is described as a film having insulating properties (that is, as an insulating film). Since the opposing electrode 113 has projections 115a and 115b at its end portion, the insulating film 50a is broken by the projections 115a and 115b. Consequently, the end portion of the opposing electrode 113 can reach the metal portion 50b through the insulating film 50a. In this manner, with the opposing electrode 113 according to this embodiment, the underlying metal portion 50b can be grounded even when the surface of the metal portion 50b is covered by the insulating film 50a, and thus the potential difference between the metal portion 50b of the object to be identified 50 and the discharge electrode 112 becomes large. For this reason, electrical discharge is prone to occur between the discharge electrode 112 and the object to be identified 50. This discharge burns away the insulating film 50a between the discharge electrode 112 and the metal portion 50b, and the exposed metal portion 50b is excited and emits light. It should be noted that the projections 115a and 115b provided on the opposing electrode 113 can be formed straight downward as shown in Figs. 2 and 3, and it is also possible for the ends of the projections 115a and 115b to be tilted toward the inner circumference in the circumferential direction as shown in FIG. 4. If the projections 115a and 115b are given such a configuration, then the projections 115a and 115b can be dug into the insulating film 50a, bringing the projections 115a and 115b into reliable contact with the metal portion 50b, by rotating the arc discharge device 11.

It is preferable that there are numerous projections 115a and 115b, and that they are pointed at their end portions, so as to increase the probability that they will come into contact with the metal portion 50b.

The optic fiber 12 is disposed near the position where the arc discharge device 11 emits light, so that it can gather the light that is emitted by the arc discharge device 11. In this embodiment, the optic fiber 12 is fixed to the opposing electrode 113 of the arc discharge device 11.

The spectroscope 13 uses the light that is gathered by the optic fiber 12 to measure the emission spectrum.

The personal computer 14 identifies the type of the metal of the object to be identified 50 by comparing the data of the emission spectrum obtained by the spectroscope 13 and the emission spectrum data of the various standard samples, which are stored in advance.

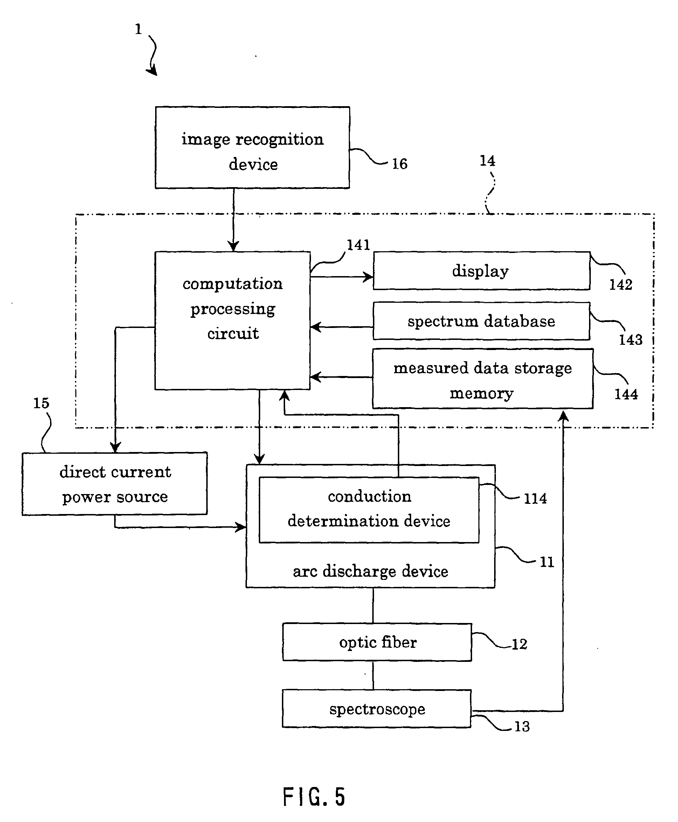

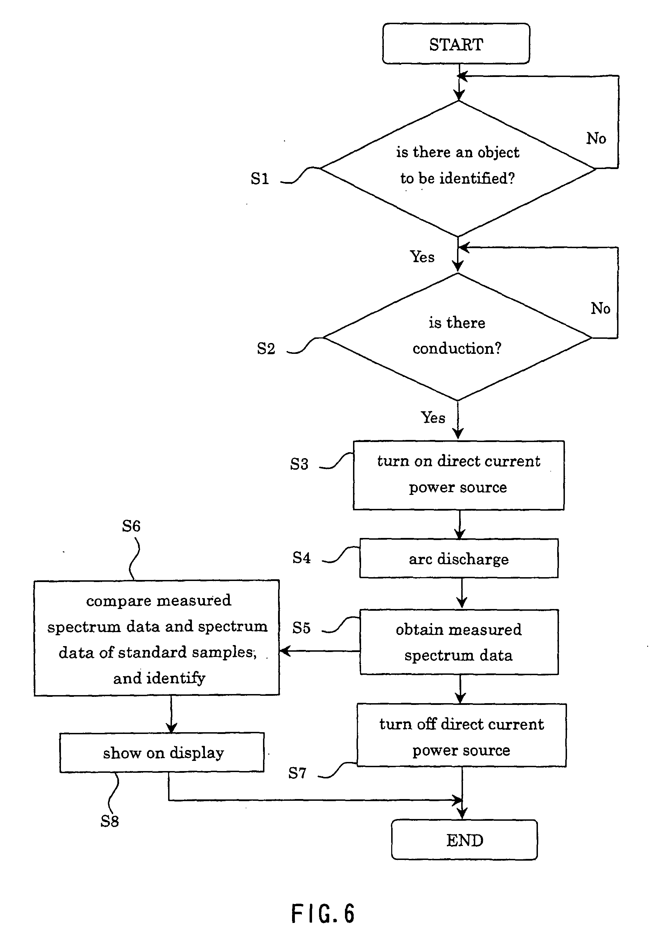

Next, the metal identification process operation of the metal identification device 1 is described with reference to FIG. 5 and FIG. 6. FIG. 5 is a block diagram of the metal identification device 1, and FIG. 6 is a flowchart showing the operation of the metal identification device 1.

If an image recognition device 16 confirms the presence of an object to be identified 50, then a computation processing circuit 141 of the personal computer 14 receives this information and places the arc discharge device 11 over the object to be identified 50, and whether there is conduction between the split electrodes 113a and 113b is determined by the conduction determination device 114 (step S1 and step S2).

If conduction between the split electrodes 113a and 113b is confirmed, the direct current power source 15 is switched on (step S3), and voltage is applied between the discharge electrode 112 of the arc discharge device 11 and the object to be identified 50, generating an arc discharge (step S4).

Light obtained through the arc discharge is carried to the spectroscope 13 via the optic fiber 12, and the spectroscope 13 measures the emission spectrum of the object to be identified 50. Spectrum data are obtained from the measured emission spectrum (step S5), and the spectrum data are stored in a measured data storage memory (measured data storage portion) 144 of the personal computer 14. Hereinafter, the data of the emission spectrum obtained through the light emitted by the object to be identified 50 are referred to as "measured spectrum data."

The measured spectrum data are compared with the spectrum data of standard samples in a spectrum database (standard sample data storage portion) 143 by the computation processing circuit (comparison and determination portion) 141, and the type of metal of the object to be identified 50 is identified (step S6). After the measured spectrum data are obtained, the switch of the direct current power source 15 is turned off (step S7). The spectrum data of the standard samples are stored in advance in the spectrum database 143 within the personal computer 14. The results of this identification are displayed on a display 142 of the personal computer 14 (step S8), and the metal identification operation is ended.

Next is a detailed description of the method for comparing the measured spectrum data and the spectrum data of the standard samples to identify the type of metal of the object to be identified 50.

In this embodiment, the spectrum data of the standard samples are stored in the spectrum database 143. More specifically, the peak spectrum wavelengths of the emission spectrum of various metallic elements that are included in household electronic appliance, for example, and that must be salvaged separately are shown as the spectrum data of the standard samples. An example of the data stored in the spectrum database 143 is shown below. It should be noted that in this example the peak spectrum wavelengths are within a wavelength range of 250 nm to 400 nm.

### Spectrum Database

| | |
|---|---|
| Metal Type | Peak Spectrum Wavelengths (nm) |
| Silver | 328.068, 337.7690 |
| Aluminum | 265.249, 266.039, 308.216, 309.271, |
| | 309.284, 394.403, 396.153 |
| Magnesium | 279.553, 280.270, 309.299, 309.690, |
| | 382.935, 383.231 |
| Copper | 261.837, 276.637, 282.437, 296.117, |
| | 324.754, 327.396 |
| Zinc | 368.347, 334.593, 334.557, 334.502, |
| | 330.294, 328.233 |
| Lead | 373.995, 367.150, 357.273, 326.235, |
| | 324.019, 322.054 |
| Tin | 321.868, 314.181, 303.278, 291.354 |
| | 285.062 |
| Phosphorus | 382.744, 337.110, 336.443, 334.770, |
| | 317.514 |

When determining the type of the metal, the peak spectrum wavelengths of the object to be identified 50 that are obtained from the measured spectrum data and the peak spectrum wavelengths of the various metallic elements in the spectrum database 143 are compared, and the number of matches of peak spectrum wavelengths are counted for each metallic element. For example, if the peak spectrum wavelengths of the object to be identified are 261.837 nm, 276.637 nm, 282.437 nm, and 308.216 nm, then the peak spectrum wavelengths of the object to be identified 50 match three of the peak spectrum wavelengths of copper and match one peak spectrum wavelength of aluminum. In this way, the number of matches between the peak spectrum wavelengths of the object to be identified 50 and the peak spectrum wavelengths of the various metallic elements is counted, and the object to be identified is determined to belong to the metal with which it has the highest number of peak spectrum wavelength matches.

The method for identifying the type of a metal using the number of matches of peak spectrum wavelengths described above is preferable for the following reasons. For example, if a melt of an object to be identified that previously has been identified and measured is adhered to the surface of the discharge electrode 112, then this melt may generate an emission spectrum due to the arc discharge. Since this melt is adhered to the surface of the discharge electrode 112, its emission efficiency is high even if it is only in minute quantity, and thus its peak intensity is large. Consequently, when determining the type of a metal by the peak intensity alone there is a risk that the type of the metal will be determined incorrectly. To prevent such an incorrect determination, it is preferable that the type of the metal is determined based on the number of matches of peak spectrum wavelengths rather than on the greatest peak intensity, as this yields more reliable results.

Using a method for identifying the type of a metal based on the number of matches of peak spectrum wavelengths allows alloys to be identified as well. More specifically, first, a first metal with the greatest number of peak spectrum wavelength matches is determined. Then, the number of matches with the peak spectrum wavelengths of the metals other than the first metal is calculated to determine a second metal with the highest number of matches of these metals. Based on these results, the metal of the object to be identified 50 can be determined to be an alloy of the first metal and the second metal.

When the surrounding temperature fluctuates, the refractive index of the light with respect to the air changes, and this changes the peak spectrum wavelengths that are obtained. Accordingly, a correction portion for correcting the data stored in the spectrum database 143 is provided, and the corrected data are stored in a separately provided memory for correction data, for example. When identifying the object to be identified 50, the corrected data that are stored in the memory for correction data, for example, are used. In this case, a sample of a single element (reference metal) serving as a reference is arc discharged before the object to be identified 50 is measured, and the difference between the peak spectrum wavelengths of the sample and the peak spectrum wavelengths of the single element stored in the spectrum database 143 is found. With this difference serving as the correction amount, the peak spectrum wavelengths of the elements stored in the spectrum database 143 are corrected, yielding emission spectrum corrected data. It should be noted that the sample that is used is preferably the same metal as the discharge electrode 112. This is because only the peak spectrum wavelengths of the metal that is used for the discharge electrode 112 appear as the emission spectrum obtained through arc discharge, and thus using the same metal as the discharge electrode 112 facilitates the correction of data.

### Second Embodiment

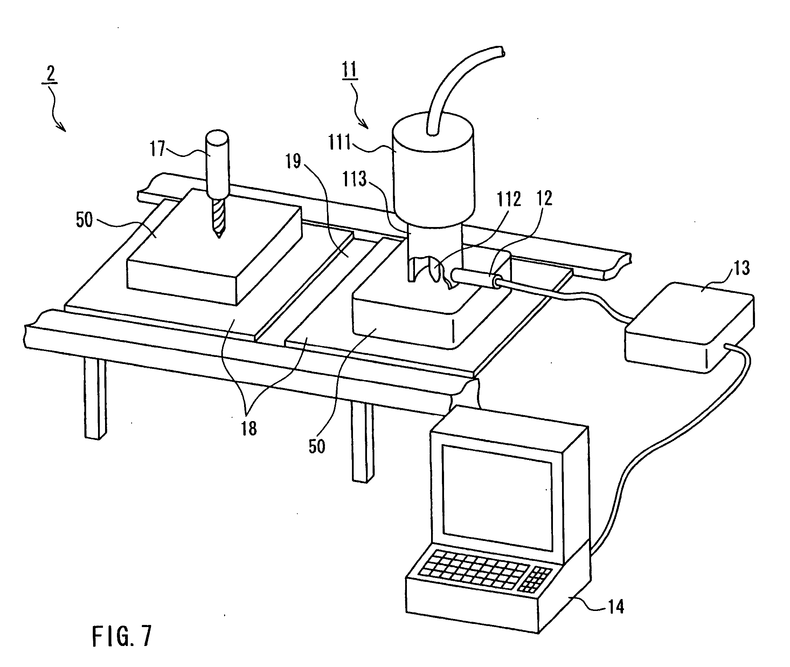

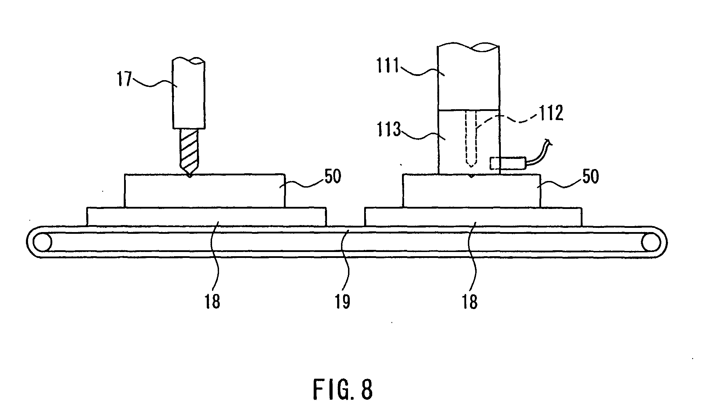

FIG. 7 is a perspective view showing how a metal identification device 2 according to a second embodiment of the present invention is used to identify an object to be identified 50. FIG. 8 is a lateral view that, like FIG. 7, shows the appearance during identification.

The metal identification device 2 of this embodiment includes the arc discharge device 11, the optic fiber 12, the spectroscope 13, the personal computer 14, and a drill (damage processing portion (defect providing member)) 17. The metal identification device 2 also includes an image recognition device (not shown) for recognizing the object to be identified 50, and a direct current power source (not shown) for supplying voltage to the arc discharge device 11.

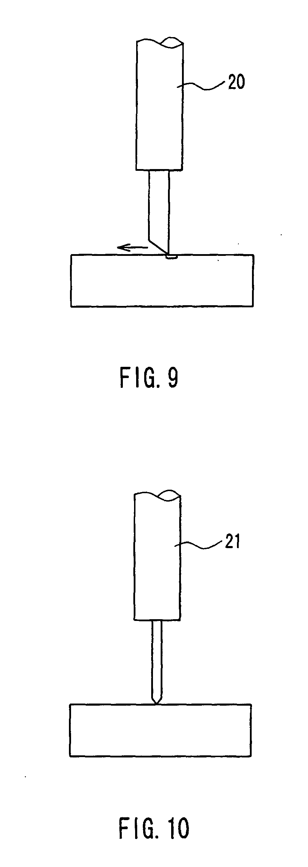

The drill 17 is provided so as to provide defects in an object to be identified 50 that has been placed on a support stand 18 and carried by a conveyor 19, and is disposed upstream of the arc discharge device 11 in the carrying direction. The drill 17 provides defects deep enough to expose the metal in at least some of the region of the object to be identified 50 in opposition to the discharge electrode 112 during arc discharge. It should be noted that as the defect providing member, it is also possible to use a cutter 20 as shown in FIG. 9 or a needle 21 as shown in FIG. 10, for example, in place of the drill 17.

The arc discharge device 11 brings the portion of the object to be identified 50 that has been provided with a defect and the discharge electrode 112 into opposition, and causes discharge. It should be noted that the arc discharge device 11 of this embodiment has substantially the same configuration as the arc discharge device described in the first embodiment, except that the opposing electrode 113 is not split into two electrodes and projections are not formed in its end portion, and a conduction determination device is not provided.

As shown in FIG. 3, the object to be identified 50 has an insulating film 50a made of a painted film, rust, or dirt, for example, on the surface of its metal portion 50b. Accordingly, to facilitate light emission from the metal portion 50b, it is preferable that a voltage that is larger than the breakdown voltage of the insulating film 50a is applied between the discharge electrode 112 and the object to be identified 50.

However, since the opposing electrode 113 for grounding the object to be identified 50 is connected to the metal portion 50b via the insulating film 50a, it is difficult to increase the potential difference between the metal portion 50b and the discharge electrode 112.

Accordingly, in the metal identification device 2 of this embodiment, a defect is provided in the surface of the insulating film 50a of the object to be identified 50 before it is arc discharged by the arc discharge device 11, lowering the breakdown voltage of the insulating film 50a. This allows the electrical discharge to be effected without applying a large voltage between the object to be identified 50 and the discharge electrode 112, even if the object to be identified 50 is covered by the insulating film 50a. This discharge burns away any insulating film 50a between the discharge electrode 112 and the metal portion 50b, and the exposed metal portion 50b becomes excited and emits light.

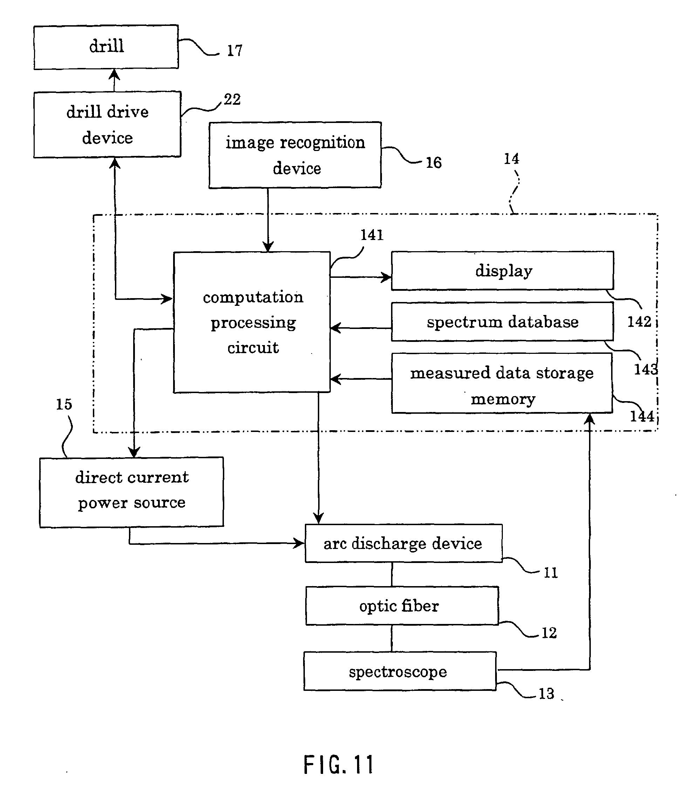

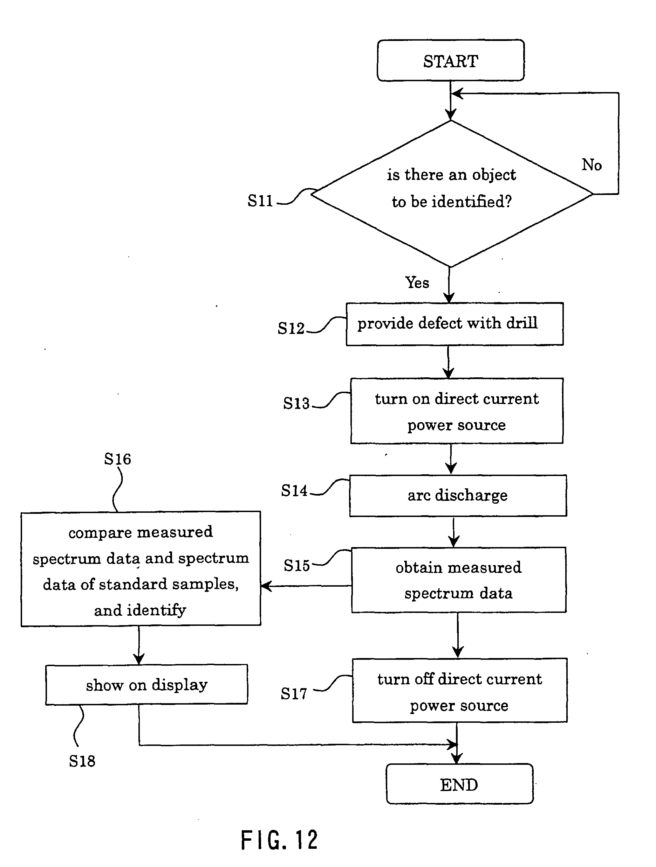

Next, the metal identification process operation of the metal identification device 2 is described with reference to FIG. 11 and FIG. 12. FIG. 11 is a block diagram showing the configuration of the metal identification device 2, and FIG. 12 is a flowchart showing the process operations of the metal identification device 2.

If the image recognition device 16 confirms the presence of an object to be identified 50, then the computation processing circuit 141 of the personal computer 14 receives that information and drives the drill 17 by a drill drive device 22 to provide a defect in the surface of the object to be identified 50 (steps S11 and S12).

Next, the switch of the direct current power source 15 is turned on (step S13) and a voltage is applied between the discharge electrode 112 of the arc discharge device 11 and the object to be identified 50, causing arc discharge (step S 14).

The process operations that follow (steps S15 to S18) are the same as the process operations (steps S5 to S8) of the metal identification device 1 described in the first embodiment, and thus are not be described here. Also, the details of the identification method of the computation processing circuit 141 are the same as those in the case of the metal identification device 1, and thus are not described here.

### Third Embodiment

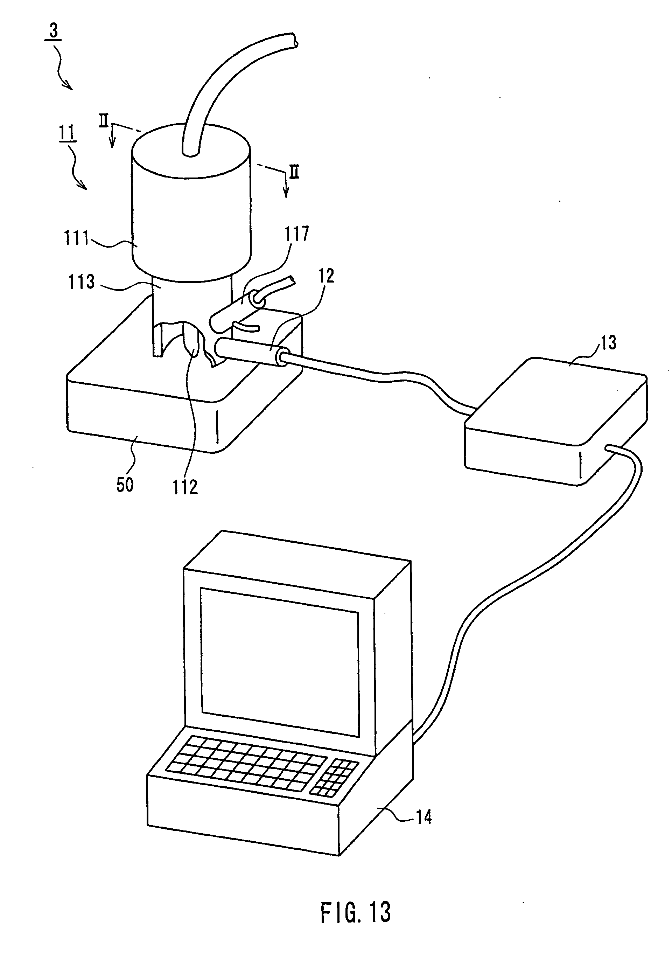

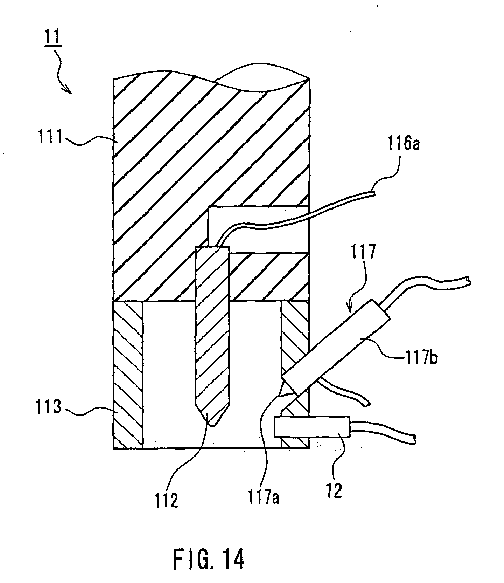

FIG. 13 shows how a metal identification device 3 according to a third embodiment of the present invention is used to identify an object to be identified 50. FIG. 14 is a cross-sectional view taken along line II-II of FIG. 13. The metal identification device 3 of this embodiment includes the arc discharge device 11, the optic fiber 12, the spectroscope 13, and the personal computer 14. The metal identification device 3 also includes an image recognition device (not shown) for recognizing the object to be identified 50, and a direct current power source (not shown) for supplying voltage to the arc discharge device 11.

The metal identification device 3 of this embodiment, like the metal identification device 2 described in the second embodiment, is provided with a defect providing member 117 for providing defects in the surface of the object to be identified 50. However, the defect providing member 117 here differs from that of the metal identification device 2 in that it is provided as a single unit with the arc discharge device 11. The arc discharge device 11 of this embodiment is provided with a main unit portion 111, a discharge electrode 112, and an opposing electrode 113. The opposing electrode 113 is formed around the periphery of the discharge electrode 112, and functions as a cover for keeping the gap between the object to be identified 50 and the discharge electrode 112 substantially constant during discharge. It should be noted that the opposing electrode 113 of this embodiment, like in the metal identification device 2 of the second embodiment, is not split into halves and projections are not provided at its end.

As shown in FIG. 14, the defect providing member 117 is made of a blade 117a for providing defects and an accommodation portion 117b for accommodating the blade 117a. The blade 117a is accommodated within the accommodation portion 117b except when it is used to provide defects in the surface of the object to be identified 50.

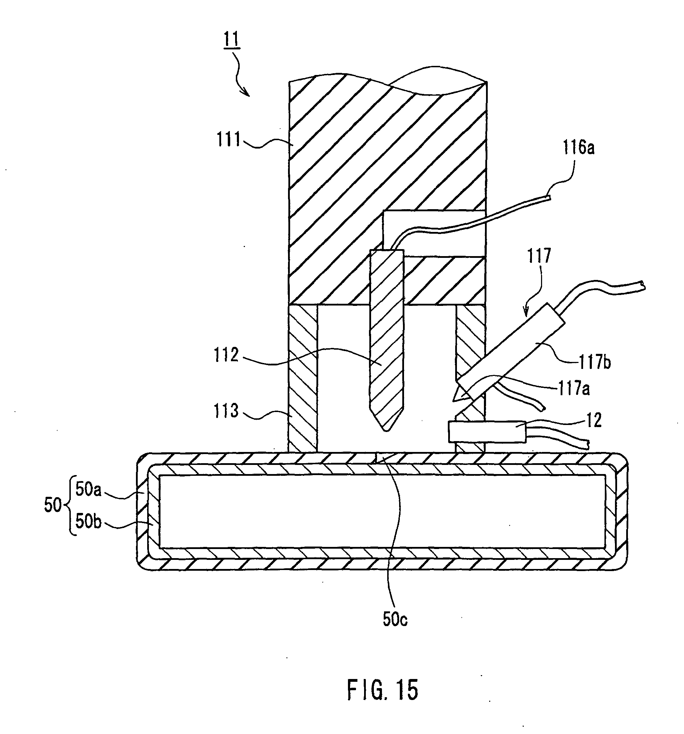

FIG. 15 shows how the opposing electrode 113 is brought into contact with the object to be identified 50 and discharge of the object to be identified 50 is carried out. In the surface of the object to be identified 50 a defect 50c is formed by the defect providing member 117 in a portion of the region that is in opposition to the discharge electrode 112 during discharge. By exposing a portion of the underlying metal portion 50b by providing the defect 50c prior to discharge, the breakdown voltage of the insulating film 50a is lowered. Consequently, even if the object to be identified 50 is covered by the insulating film 50a, electrical discharge can be caused between the object to be identified 50 and the discharge electrode 112 so that the metal of the object to be identified 50 emits light. It should be noted that the metal identification process operation of the metal identification device 3 is substantially the same as that of the metal identification device 2, and thus description thereof is omitted here.

### Fourth Embodiment

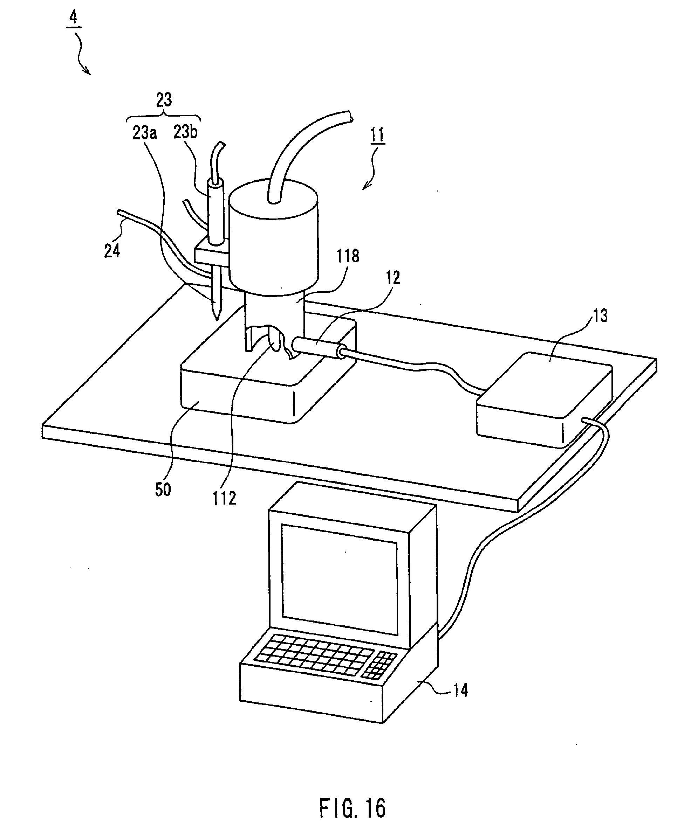

FIG. 16 shows how a metal identification device 4 according to a fourth embodiment of the present invention is used to identify an object to be identified 50. The metal identification device 4 of this embodiment includes the arc discharge device 11, the optic fiber 12, the spectroscope 13, the personal computer 14, and an electrode portion 23. The metal identification device 4 also includes an image recognition device (not shown) for recognizing the object to be identified, and a direct current power source (not shown) for supplying voltage to the arc discharge device 11.

The arc discharge device 11 is provided with a main unit portion 111, a discharge electrode 112, and a cover 118. The cover 118 is an insulating material and is formed around the periphery of the discharge electrode 112. The cover 118 also functions to keep the gap between the object to be identified 50 and the discharge electrode 112 substantially constant during discharge, as well as functions to fix the optic fiber 12.

The electrode portion 23 is an opposing electrode provided to ground the object to be identified 50 during discharge, and is made of a probe (needle-shaped electrode) 23a connected to a ground line 24 and a probe control device 23b for controlling the probe 23a. The probe control device 23b is for example an air cylinder or a motor.

The probe 23a allows the insulating film on the surface of the object to be identified 50 to be broken when the object to be identified 50 is grounded. Consequently, the tip of the probe 23a can reach the underlying metal portion through the insulating film. In this way, the probe 23a allows the underlying metal portion to be grounded even if the surface of the object to be identified 50 is covered by an insulating film, and thus the potential difference between the metal portion of the object to be identified 50 and the discharge electrode 112 becomes large and discharge occurs easily between the discharge electrode 112 and the object to be identified 50. Due to this discharge, the insulating film that is present between the discharge electrode 112 and the metal portion of the object to be identified 50 is burned away, and the exposed metal portion becomes excited and emits light.

Also, since the discharge electrode 113 of the arc discharge device 11 is surrounded by the cover 118, which is an insulating material, and the probe 23a is disposed outside of the cover 118, discharge between the discharge electrode 113 and the probe 23a can be inhibited.

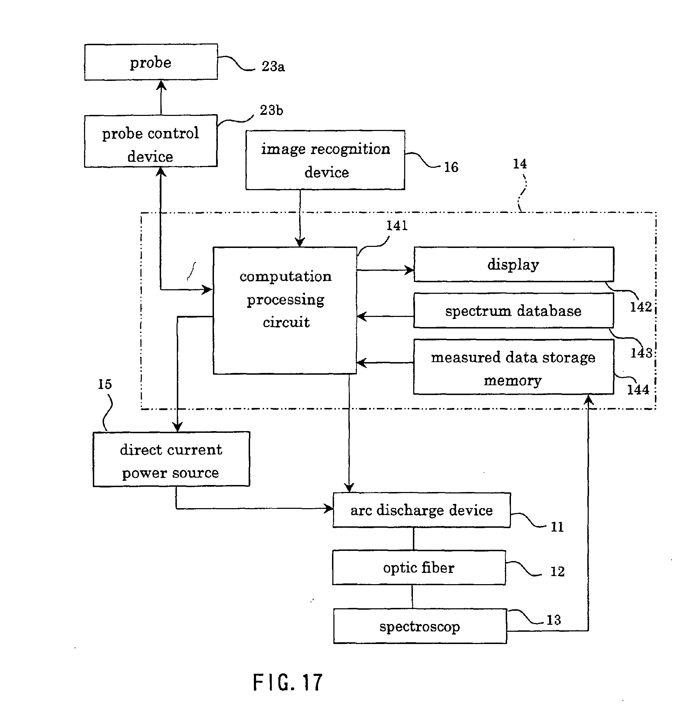

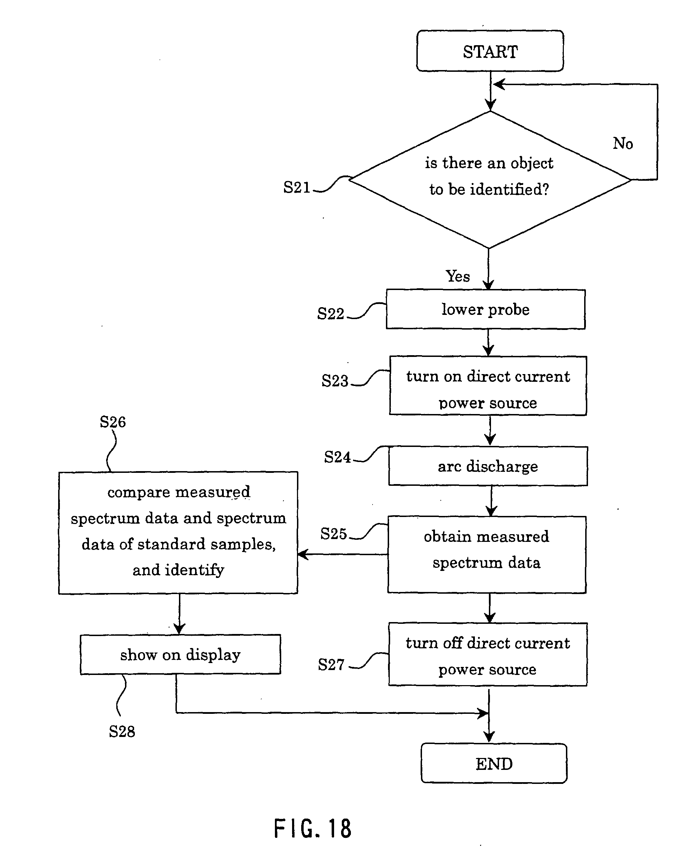

Next, the metal identification operation of the metal identification device 4 is described with reference to FIG. 17 and FIG. 18. FIG. 17 is a block diagram showing the configuration of the metal identification device 4, and FIG. 18 is a flowchart showing the process operation of the metal identification device 4.

When the image recognition device 16 confirms the presence of the object to be identified 50, the computation processing circuit 141 of the personal computer 14 receives this information and lowers the probe 23a down to the position of the object to be identified 50 with the probe control device 23b (steps S21 and S22).

After it is confirmed that the probe 23a has come into contact with the object to be identified 50, the switch of the direct current power source 15 is turned on (step S23), and voltage is applied between the discharge electrode 112 of the arc discharge device 11 and the object to be identified 50, causing an arc discharge (step S24).

The process operations that follow (steps S25 to S28) are the same as the process operations (steps S5 to S8) of the metal identification device 1 described in the first embodiment, and thus are not be described here. Also, the details of the identification method of the computation processing circuit 141 are the same as those in the case of the metal identification device 1, and thus they are not described here.

### Fifth Embodiment

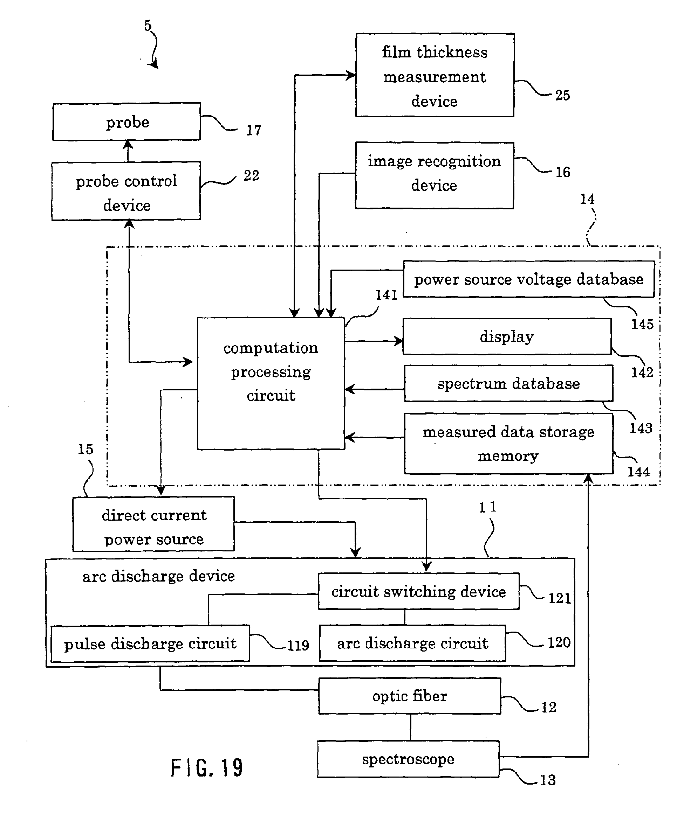

FIG. 19 is a block diagram of a metal identification device according to a fifth embodiment of the present invention. The metal identification device 5 of this embodiment has substantially the same configuration as the metal identification device 4 described in the fourth embodiment, except that a film thickness measurement device 25 for measuring the thickness of the insulating film of the object to be identified is provided, and the internal configuration of the arc discharge device 11 is different. In the metal identification device 5, the arc discharge device 11 includes a pulse discharge circuit 119, an arc discharge circuit 120, and a circuit switching device 121, in order to remove a portion of the insulating film of the object to be identified through pulse discharge before arc discharge is performed so that only the metal component of the object to be identified is made to emit light due to the arc discharge. In other words, together with the probe 23a, the pulse discharge circuit 119 also functions as a damage processing portion for damaging at least some of the surface of the object to be identified 50. Also, the personal computer 14 includes a power source voltage database 145 in order to set the application voltage during pulse discharge in correspondence with the results of the measurement of the film thickness measurement device 25.

With the above-described metal identification device 5, the insulating film is removed before the object to be identified is made to emit light due to an arc discharge, and therefore it is possible to excite only the metal component of the object to be identified and make it emit light. Thus, even if the object to be identified has an insulating film on its surface, it is possible to achieve an increase in the identification precision in addition to the effect of permitting identification of the object to be identified.

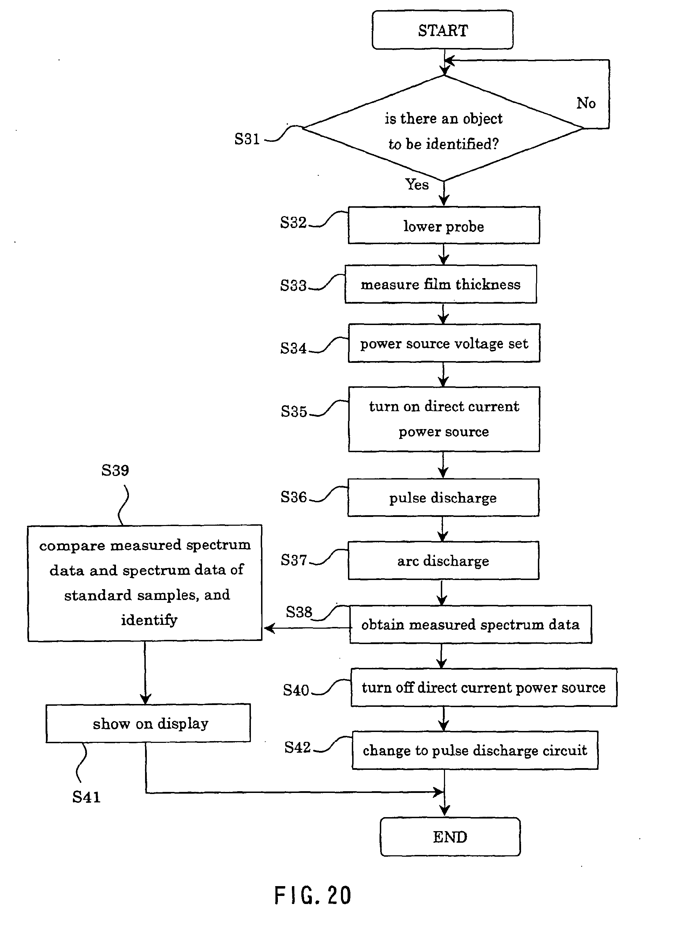

Hereinafter, the metal identification operation of the metal identification device 5 is described with reference to the block diagram of FIG. 19 and the flowchart shown in FIG. 20.

When the image recognition device 16 confirms the presence of an object to be identified, the computation processing circuit 141 of the personal computer 14 receives this information and lowers the probe 23a down to the position of the object to be identified using the probe control device 23b (steps S31 and S32).

Then, a probe for measuring film thickness (not shown) that is included in the film thickness measurement device 25 is lowered by a motor or the like and measures the film thickness of the insulating film of the object to be identified (step S33).

From the results of the measurement of the film thickness measurement device 25, the application voltage during pulse discharge is determined in accordance with the power source voltage database 145 (step S34). The switch of the direct current power source 15 is then turned on (step S35) and voltage is applied between the discharge electrode 112 of the arc discharge device 11 and the object to be identified, causing a pulse discharge (step S36). This pulse discharge removes a portion of the insulating film on the object to be identified.

Next, the circuit switching device 121 switches the circuit from the pulse discharge circuit 119 to the arc discharge circuit 120. Subsequent process operations (steps S37 to S41) are the same as the process operations (steps S4 to S8) of the metal identification device 1 described in the first embodiment, and thus description thereof is omitted here. However, in the metal identification device 5 of this embodiment, lastly the circuit switching device 121 switches the circuit from the arc discharge circuit 120 to the pulse discharge circuit 119. (step S42). Also, the details of the identification method of the computation processing circuit 141 are the same as those of the metal identification device 1, and thus are not described here.

### Sixth Embodiment

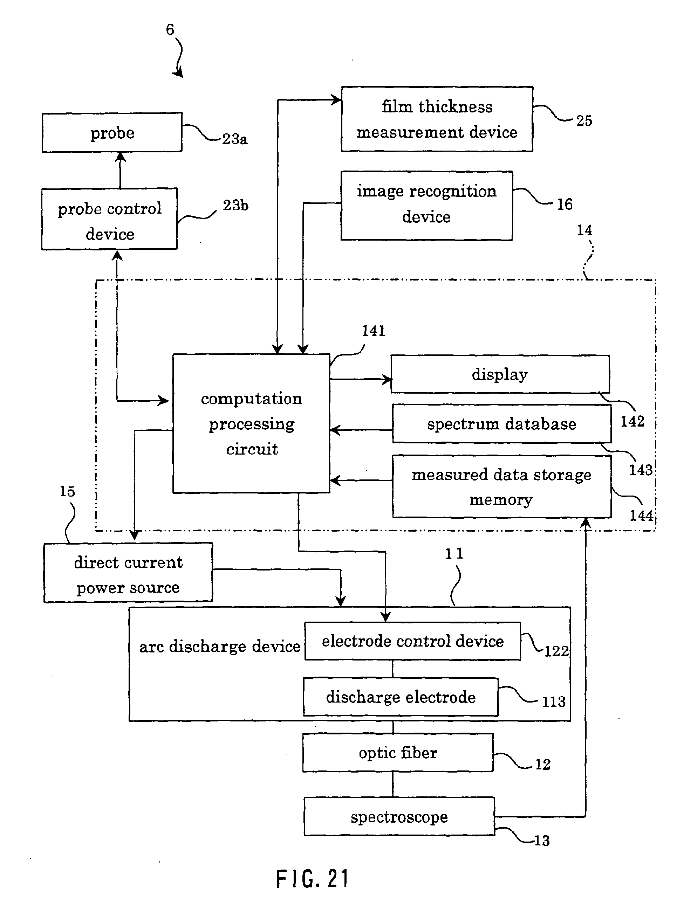

FIG. 21 shows a block diagram of a metal identification device 6 according to a sixth embodiment of the present invention. The metal identification device 6 of this embodiment has substantially the same configuration as the metal identification device 4 described in the fourth embodiment, except that it is provided with a film thickness measurement device 25 for measuring the thickness of the insulating film of the object to be identified, and the internal configuration of the arc discharge device 11 is different.

In the metal identification device 6, the position of the discharge electrode 113 and the voltage that is applied to the discharge electrode 113 during arc discharge are controlled in accordance with the results of the measurement of the film thickness measurement device 25. The arc discharge device 11 includes an electrode control device (first electrode-sample distance control portion) 123 for controlling the position of the discharge electrode 113.

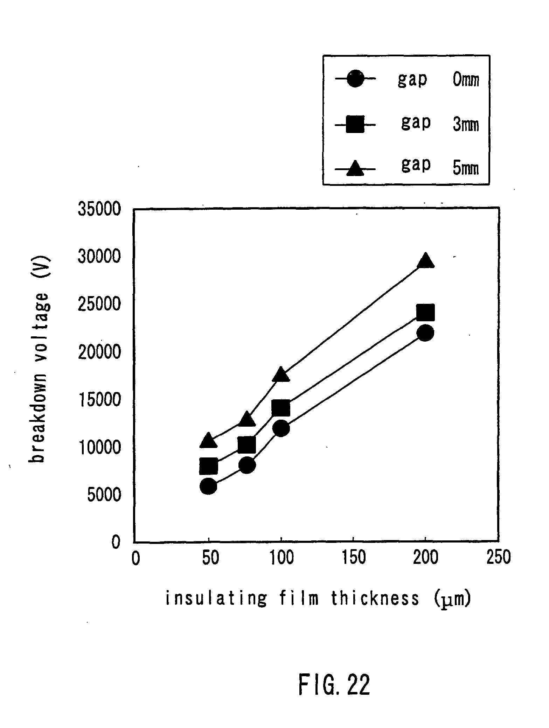

In general, the breakdown voltage increases with increased thickness of the insulating film of the object to be identified, thus making it difficult to excite the object to be identified and cause it to emit light through an arc discharge. As shown in FIG. 22, as the insulating film increases in film thickness its breakdown voltage also increases. It is also clear from FIG. 22 that at the same insulating film thickness, the breakdown voltage is smaller the smaller the gap between the discharge electrode 113 and the object to be identified. Accordingly, the metal identification device 6 of this embodiment controls the position of the discharge electrode 113 so that the gap between the discharge electrode 113 and the object to be identified is small when the insulating film is thick. Moreover, by allowing the application voltage to be controlled during arc discharge as well, it becomes possible to perform more stable identification.

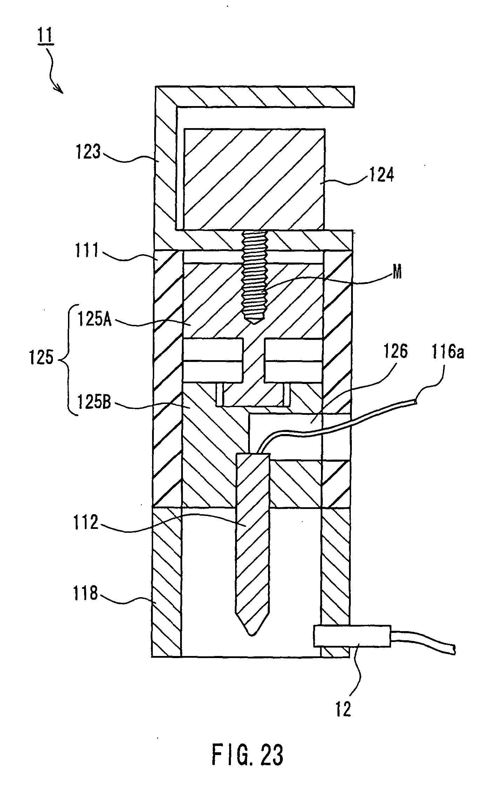

Next, the mechanism for controlling the position of the discharge electrode 113 in the arc discharge device 11 is described using FIG. 23. A motor attachment fixture 123 is provided in the arc discharge device 11 above the main unit portion 111, and a motor 124 is attached thereto. When the motor 124 is driven, a motor rotational shaft M having a screw portion is rotated, and in conjunction with this rotation a joint 125 moves up and down. The joint 125 is made of at least two portions. A joint 125A connected to the motor rotational shaft M is formed of metal for the sake of durability. On the other hand, a joint 125B, which is a portion connected to the discharge electrode 112, is made of an insulating material. Also, the reference numeral 126 in the diagram denotes space for drawing out a lead line 116a connected to the discharge electrode 112 to the outside from the arc discharge device 11.

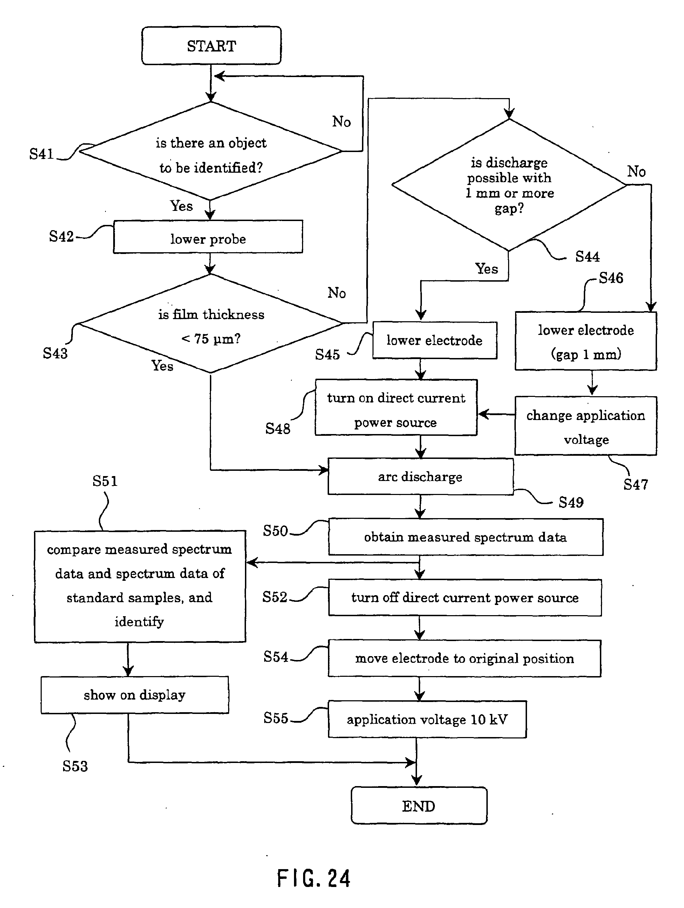

Hereinafter, the identification operation of the metal identification device 6 is described with reference to the block diagram of FIG. 21 as well as the flowchart shown in FIG. 24.

When the image recognition device 16 confirms the presence of an object to be identified, the computation processing circuit 141 of the personal computer 14 receives this information and lowers the probe 23a down to the position of the object to be identified by the probe control device 23b (steps S41 and S42).

Then, a probe for measuring film thickness (not shown) that is included in the film thickness measurement device 25 is lowered by a motor or the like and measures the film thickness of the insulating film of the object to be identified (step S43).

Next, it is determined whether the film thickness of the insulating film is less than 75 µm (step S43), and if the film thickness of the insulating film is not less than 75 µm, then it is determined whether discharge is possible at a gap of 1 mm or more between the discharge electrode 112 and the object to be identified when the application voltage is 10 kV (step S44). If it is determined that discharge is possible at a gap of 1 mm or more, then the discharge electrode 113 is lowered to a distance where discharge is possible at an application voltage of 10 kV (step S45). If it is determined that discharge is not possible at a gap of 1 mm or more, then the discharge electrode 113 is lowered to a position where the gap is 1 mm (step S46), and the application voltage is changed to a dischargeable voltage (step S47). It should be noted that the values used as referents here (film thickness 75 µm, gap 1 mm, application voltage 10 kV) are only examples, and other values may be used as the referents. Also, the application voltage is controlled by the computation processing circuit 141.

Then, the switch of the direct current power source 15 is turned on (step S48) and the set voltage is applied between the discharge electrode 112 of the arc discharge device 11 and the object to be identified, causing an arc discharge (step S49). The subsequent process operations after the measured spectrum data are obtained (steps S50 to S53) are the same as the process operations (steps S5 to S8) of the metal identification device 1 described in the first embodiment, and thus are not be described here. However, in the metal identification device 6 of this embodiment, the position of the discharge electrode 112 and the value of the application voltage are returned to their initial values before processing is ended (steps S54 and S55). Also, the details of the identification method of the computation processing circuit 141 are the same as those in the case of the metal identification device 1, and thus they are not described here.

### Seventh Embodiment

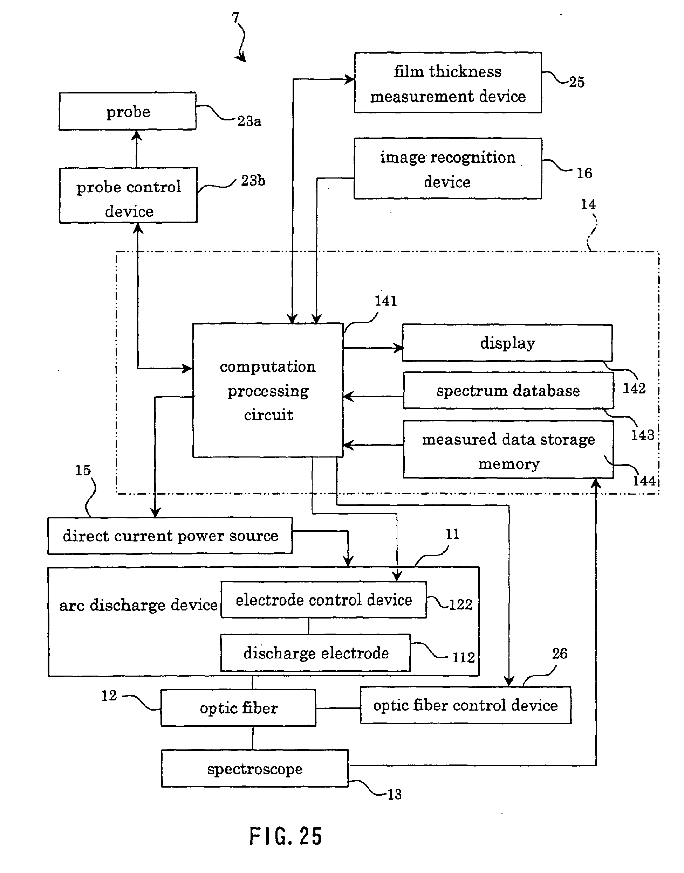

FIG. 25 shows a block diagram of a metal identification device 7 of a seventh embodiment of the present invention. The metal identification device 7 of this embodiment has substantially the same configuration as the metal identification device 6 described in the fifth embodiment, except that the optic fiber 12 is fixed in such a manner that its position with respect to the arc discharge device 11 can be changed, and that an optic fiber control device (a light gathering portion position control portion) 26 for changing the position of the optic fiber 12 in correspondence with the position of the discharge electrode 112 further is provided.

In the metal identification device 7, the position of the discharge electrode 112 and the application voltage during arc discharge are changed in correspondence with the thickness of the insulating film of the object to be identified. Thus, when the position of the discharge electrode or the application voltage is changed, the light emission position during arc discharge also is changed. Accordingly, the metal identification device 7 changes the position of the optic fiber 12 according to this change in the light emission position. For example, the position of the optic fiber 12 is changed by employing a database or the like storing the light emission position with the highest light intensity with respect to combinations of the position of the discharge electrode 112 and the application voltage. Consequently, since the amount of light that is gathered by the optic fiber 12 increases, the intensity of the light inputted into the spectroscope 13 is large, and this allows more precise identification.

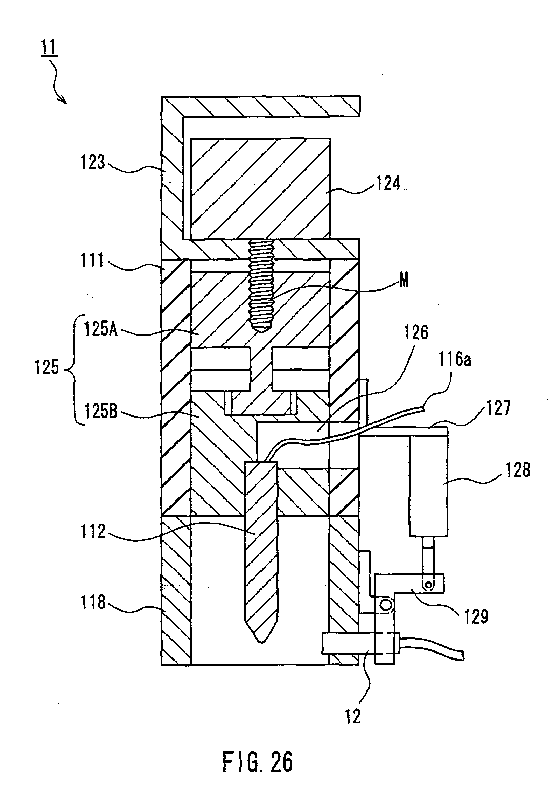

Next, the mechanism for changing the position (in this embodiment, the slant angle) of the optic fiber 12 with respect to the arc discharge device 11 is described using FIG. 26. It should be noted that the mechanism for controlling the position of the discharge electrode 112 is the same as that of the metal identification device 6. A motor attachment fixture 127 is fixed to a lateral surface of the main unit portion 111 of the arch discharge device 11. A motor 128 is attached to the motor attachment fixture 127. The motor 128 and the optic fiber 12 are coupled to one another via a joint 129. The joint 129 is rotated by the motor 128, and in conjunction with this rotation the optic fiber 12 is rotated, adjusting its angle.

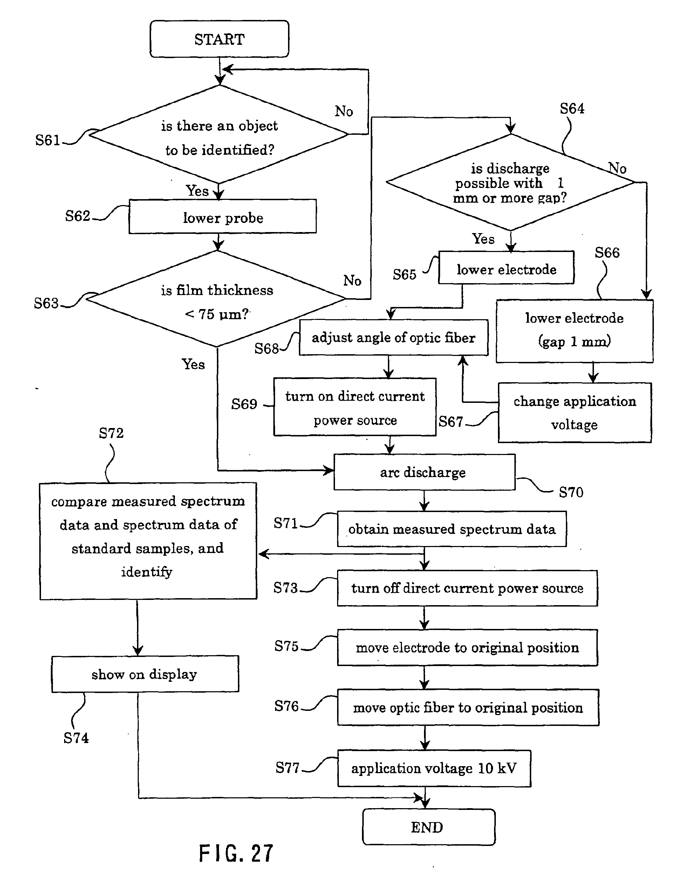

The identification operation of the metal identification device 7 is described below with reference to the block diagram of FIG. 25 and the flowchart of FIG. 27.

The process operations from the start of processing up to changing the position of the optic fiber 12 (steps S61 to S66) are the same as to process operations of the metal identification device 6 described in the sixth embodiment (steps S41 to S46). Next, the position of the optic fiber 12 is changed (the angle is adjusted) by the optic fiber control device 26 (the motor 128 and the joint 129) in correspondence with the position of the discharge electrode 112 and the application voltage (step S68). The subsequent process operations (steps S69 to S74) are the same as the process operations (steps S3 to S8) of the metal identification device 1 described in the first embodiment, and thus are not be described here. However, in the metal identification device 7 of this embodiment, the position of the discharge electrode 112, the position of the optic fiber 12, and the value of the application voltage are returned to their initial values before processing is ended (steps S75 to S77). Also, the details of the identification method of the computation processing circuit 141 are the same as those in the case of the metal identification device 1, and thus description thereof is omitted here.

### Eighth Embodiment

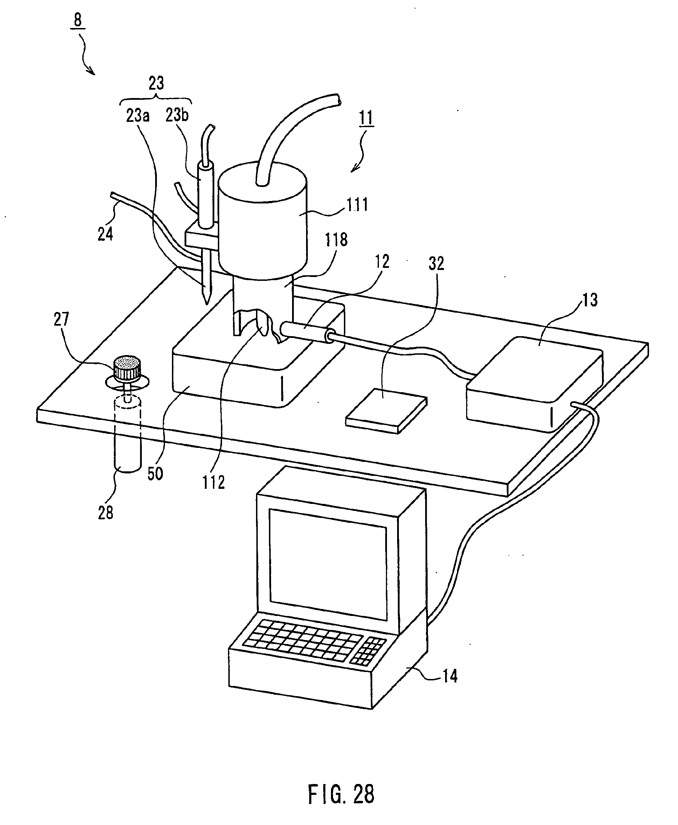

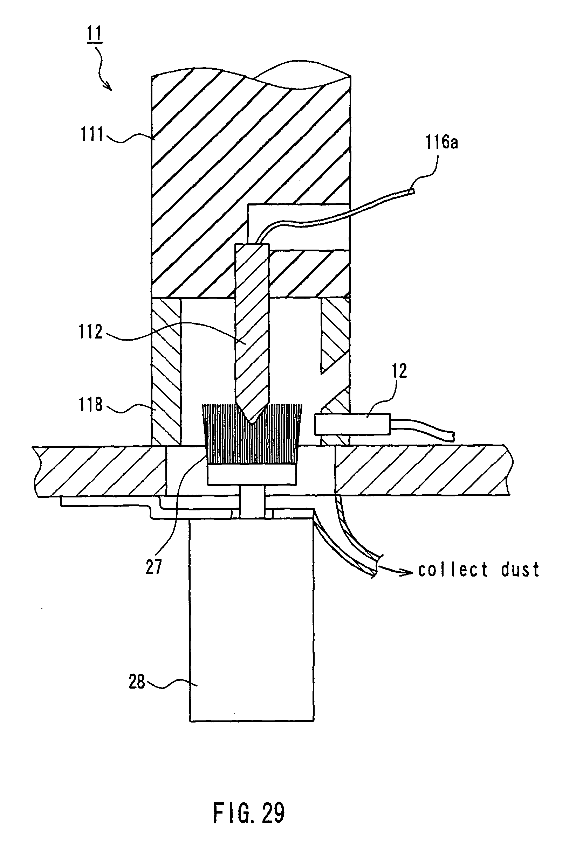

FIG. 28 shows how a metal identification device according to an eighth embodiment of the present invention is used to identify an object to be identified 50. FIG. 29 shows how the discharge electrode 112 is cleaned. The metal identification device 8 of this embodiment includes the arc discharge device 11, the optic fiber 12, the spectroscope 13, the personal computer 14, the electrode portion 23, a rotating brush (cleaning portion) 27 for cleaning the discharge electrode 112, and a rotating brush control device (cleaning portion) 28 for rotating the rotating brush 27. The metal identification device 8 also includes an image recognition device (not shown) for recognizing the object to be identified, a direct current power source (not shown) for supplying voltage to the arc discharge device 11, and an arc discharge device control device (not shown) such as a robotic arm for moving the arc discharge device 11 to a predetermined position. The reference numeral 32 denotes a reference metal.

If determined to be necessary when carrying out processing for identifying the object to be identified, the metal identification device 8 polishes the end portion of the discharge electrode 112 with the rotating brush as shown in FIG. 29 so as to remove components that are adhered to the electrode. By doing this, inaccurate identification caused by components that are adhered to the discharge electrode 112 can be prevented.

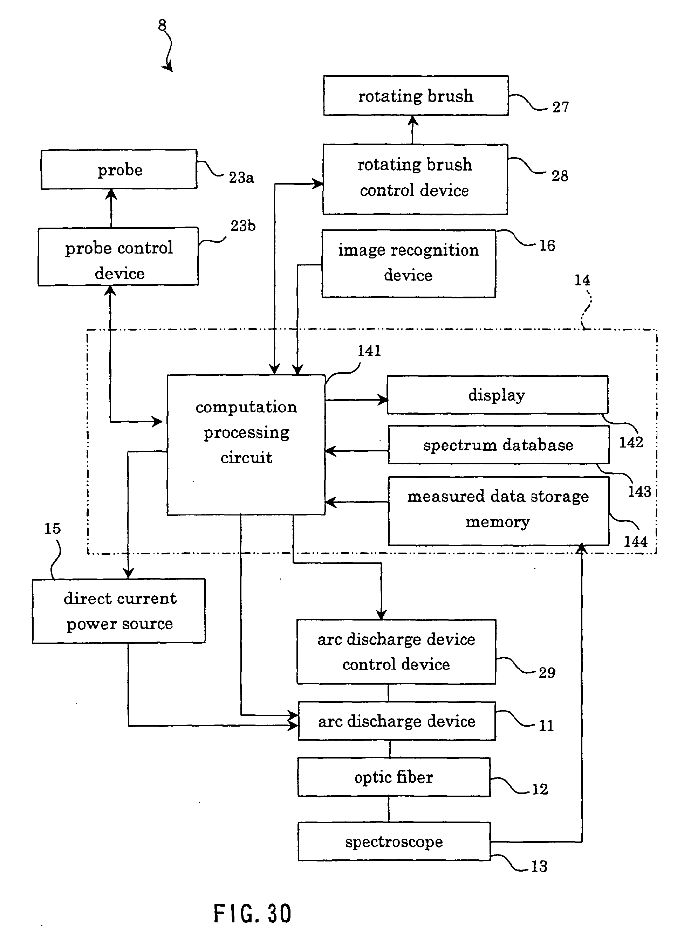

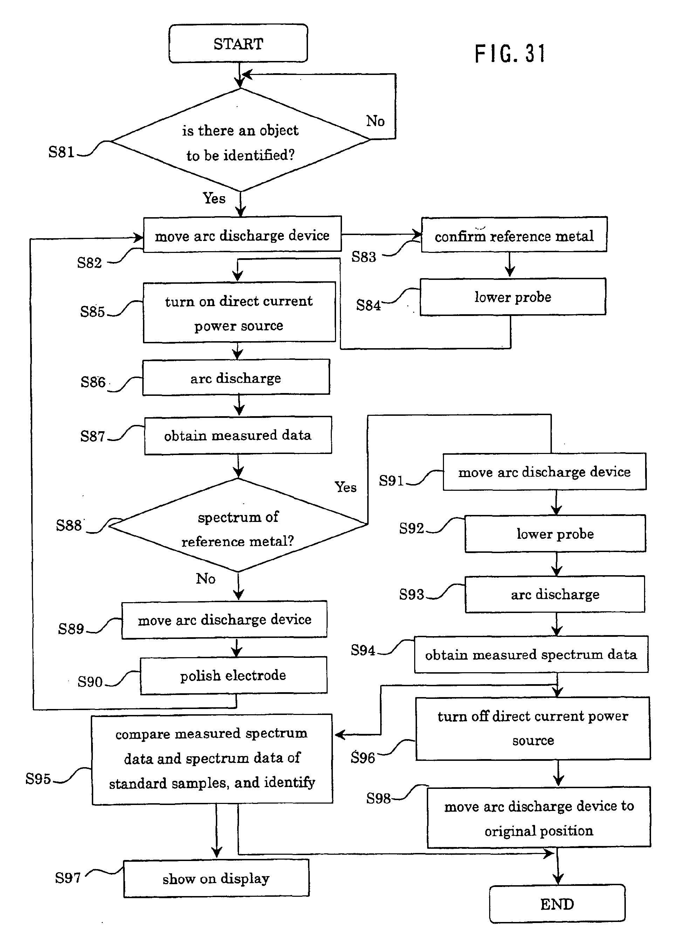

The identification operation of the metal identification device 8 is described below with reference to FIG. 30 and FIG. 31. FIG. 30 is a block diagram showing the configuration of the metal identification device 8, and FIG. 31 is a flowchart showing the process operations of the metal identification device 8.

When the image recognition device 16 confirms the presence of the object to be identified 50, the computation processing circuit 141 of the personal computer 14 receives this information and moves the arc discharge device 11 up to the position of the reference metal 32 (steps S81 and S82).

Next, once the image recognition device 16 has recognized the reference metal 32, the probe 23a is lowered and brought into contact with the reference metal 32 (steps S83 and S84).

Then, the switch of the direct current power source 15 is turned on (step S85) and voltage is applied between the discharge electrode 112 of the arc discharge device 11 and the reference metal 32, causing an arc discharge (step S86).

The light obtained due to the arc discharge is carried to the spectroscope 13 via the optic fiber 12, and the emission spectrum of the reference metal 32 is measured. Measured spectrum data then are obtained from the measured emission spectrum (step S87). The measured spectrum data are stored within a measured data storage memory 145 of the personal computer 14.

Whether the measured spectrum data include only the spectrum of the reference metal 32 is determined (step S88). If it is determined that spectra other than the spectrum of the reference metal 32 are included, then the arc discharge device 11 is moved to the position of the rotating brush 27 (step S89) and the discharge electrode 112 is polished by the rotating brush 27 to remove adhered objects (step S90).

If it is determined that spectra other than the spectrum of the reference metal 32 are not included, then the arc discharge device 11 is moved to the position of the object to be identified 50 (step S91). The probe 23a is lowered and brought into contact with the object to be identified (step S92). The process operations that follow after this (steps S93 to S97) are identical to the process operations (steps S4 to S7) of the metal identification device 1 described in the first embodiment, and thus are not described here. However, in the metal identification device 8 of this embodiment, lastly the arc discharge device 11 is moved back to its original position (step S98). Also, the specific identification method of the computation processing circuit 141 is the same as that in the case of the metal identification device 1, and thus is not discussed here.

### Ninth Embodiment

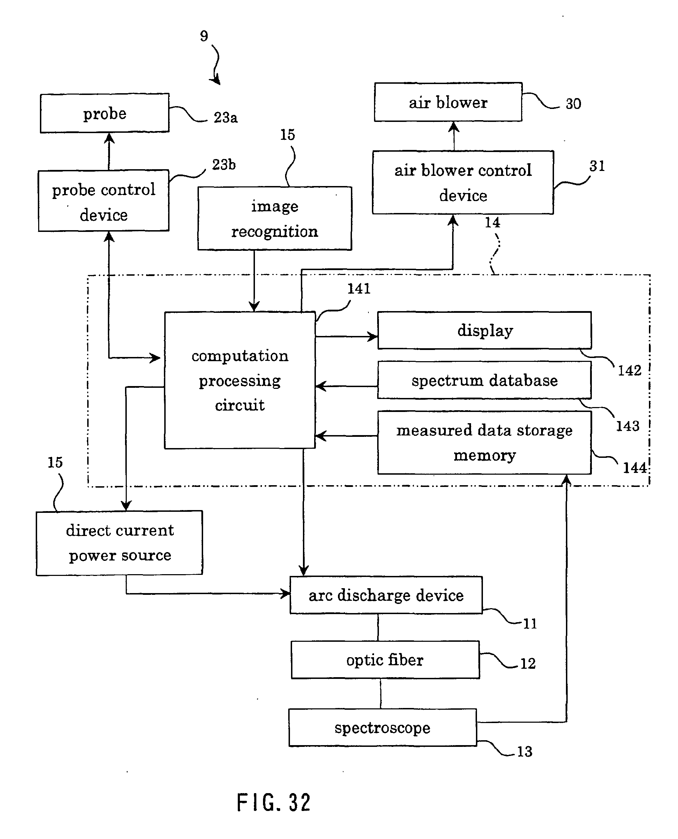

FIG. 32 is a block diagram of a metal identification device 9 according to a ninth embodiment of the present invention. The metal identification device 9 of this embodiment includes an air blower 30 and an air blower control device 31 as a cleaning portion for cleaning the discharge electrode 11. The air blower 30 and the air blower control device 31 are fastened to the arc discharge device 11, and blow air onto the discharge electrode 112 during discharge so that some of the object to be identified 50 does not adhere thereto, allowing the discharge electrode 112 to be cleaned in parallel with discharging. Consequently, it is not necessary to perform cleaning before or after discharge, and this makes identification even simpler.

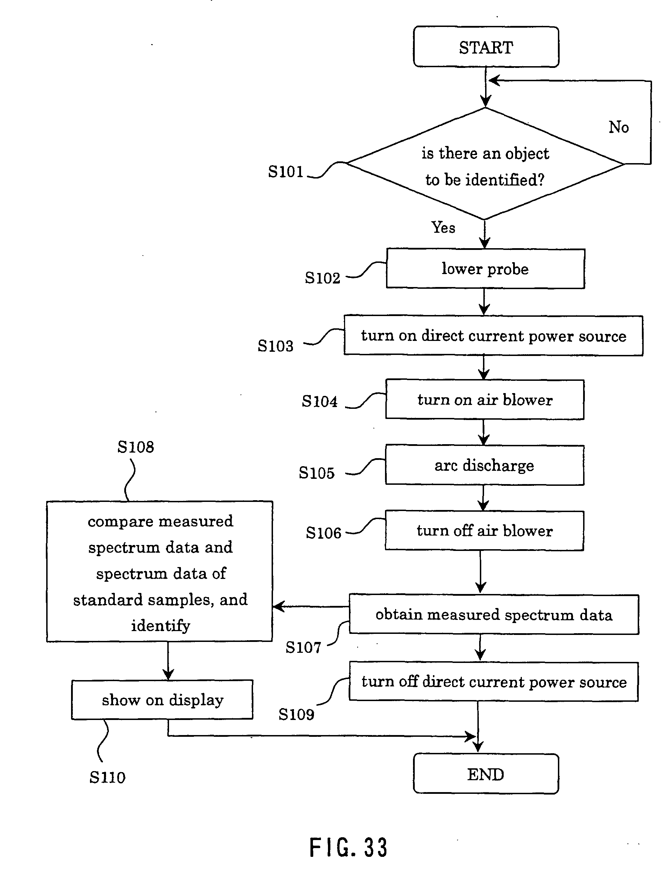

FIG. 33 is a flowchart showing the process operations of the metal identification device 9.

When the image recognition device 16 confirms the presence of the object to be identified 50, the computation processing circuit 141 of the personal computer 14 receives this information and lowers the probe 23a (steps S101 and S102).

Next, the switch of the direct current power source 15 is turned on (step S103), and after the switch of the air blower 30 is also turned on (step S104), voltage is applied between the discharge electrode 112 of the arc discharge device 11 and the object to be identified 50, causing an arc discharge (step S105). After the arc discharge, the switch of the air blower 30 is turned off (step S106).

The process operations that follow (steps S107 to S110) are identical to the process operations (steps S5 to S8) of the metal identification device 1 described in the first embodiment, and thus are not described here. Also, the specific identification method of the computation processing circuit 141 is the same as that in the case of the metal identification device 1, and thus is not discussed here.

### Tenth Embodiment

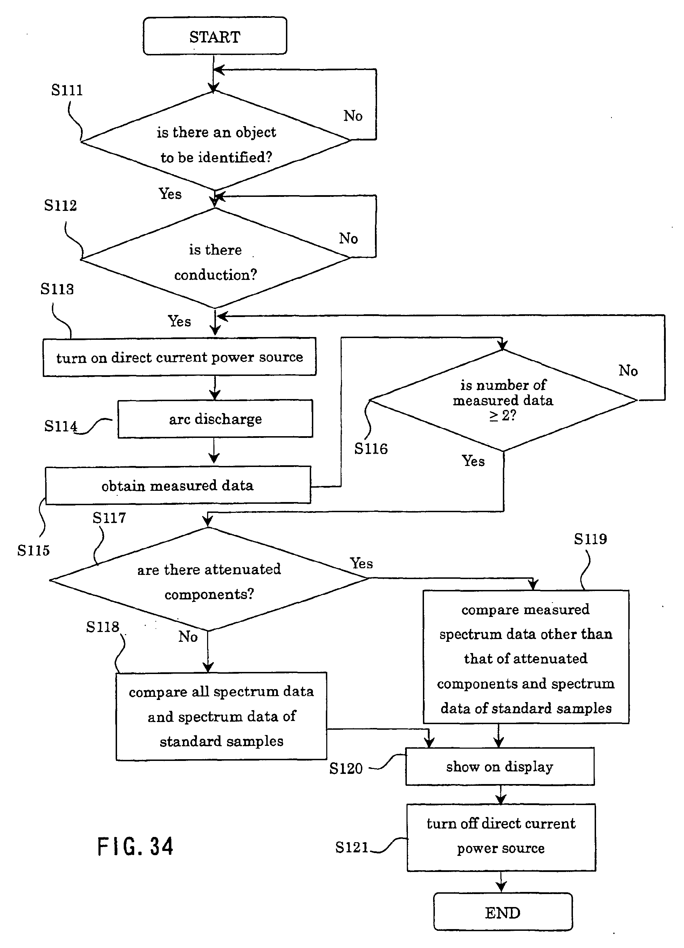

The metal identification device of a tenth embodiment of the present invention has substantially the same configuration as the metal identification device 1 described in the first embodiment, however, its metal identification method is different. The metal identification method of this metal identification device is described below with reference to the block diagram of FIG. 5 and the flowchart shown in FIG. 34.

The procedure from confirmation of the object to be identified 50 by the image recognition device 16 (step 111) to turning on the switch of the direct current power source (step S113) is the same as that of the metal identification device 1.

Next, a voltage is applied between the discharge electrode 112 of the arc discharge device 11 and the object to be identified 50, causing an arc discharge (step S114). The light that is obtained due to this arc discharge is transmitted to the spectroscope 13 via the optic fiber 12, and the emission spectrum of the object to be identified 50 is measured a plurality of times at given time intervals. Consequently, a plurality of measured spectrum data that differ over time are obtained. Measured spectrum data then are obtained from the emission spectrum that was measured (step S115). The measured spectrum data are stored in a measured data storage memory 145 of the personal computer 14.

Next, it is determined whether the number of measured spectrum data is two or more (step S116). If the number of measured spectrum data is less than two, then arc discharge is performed again and the emission spectrum is measured.

If the number of measured spectrum data is two or more, then the computation processing circuit 141 determines whether there are spectrum components that are attenuated over time (step S117). If it is determined that there are no attenuated components, then all of the measured spectrum data are compared with the spectrum data of the standard samples in the spectrum database 143, and the metal is identified (step S118). On the other hand, if it is determined that there are attenuated components, then the spectrum data other than that of the attenuated components are compared with the spectrum data of the standard samples in the spectrum database 143, and the metal is identified (step S119).

The results of the identified metal are displayed on the display (step S120) and the direct current power source is turned off (step S121), after which processing is ended.

As illustrated above, according to this metal identification method using the metal identification device, the emission spectrum that is obtained through arc discharge is measured a plurality of times over given units of a time, the presence of attenuated components is determined using the plurality of measured spectrum data that are obtained, and identification is performed under the assumption that the spectrum is of a component in which the attenuated components are included in the insulating film. Since it is conceivable that the insulating film will vaporize as discharge proceeds, measurement is performed at given time intervals, and by removing the attenuated components of the emission spectrum from the overall spectrum, it is possible to obtain an emission spectrum of only the metal of the object to be identified 50.

### Eleventh Embodiment

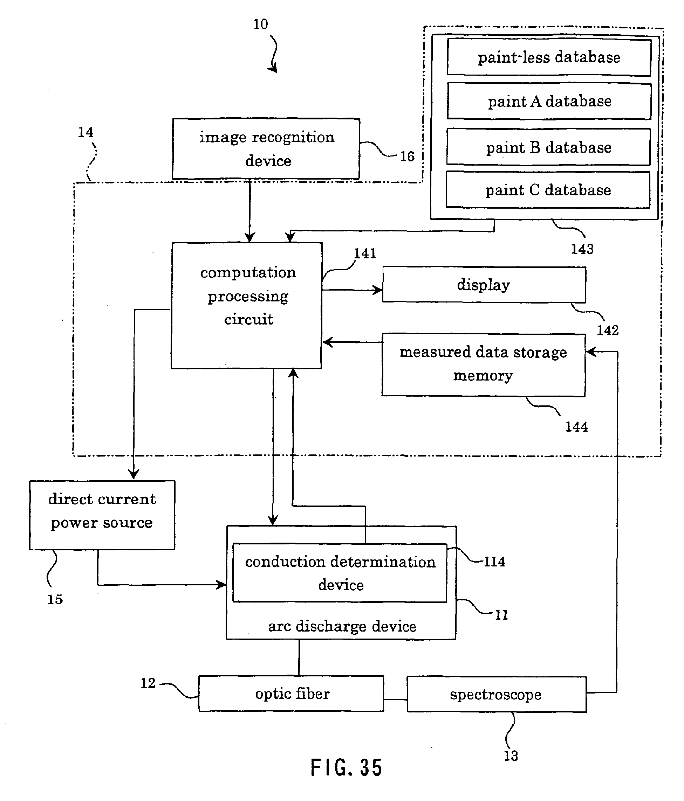

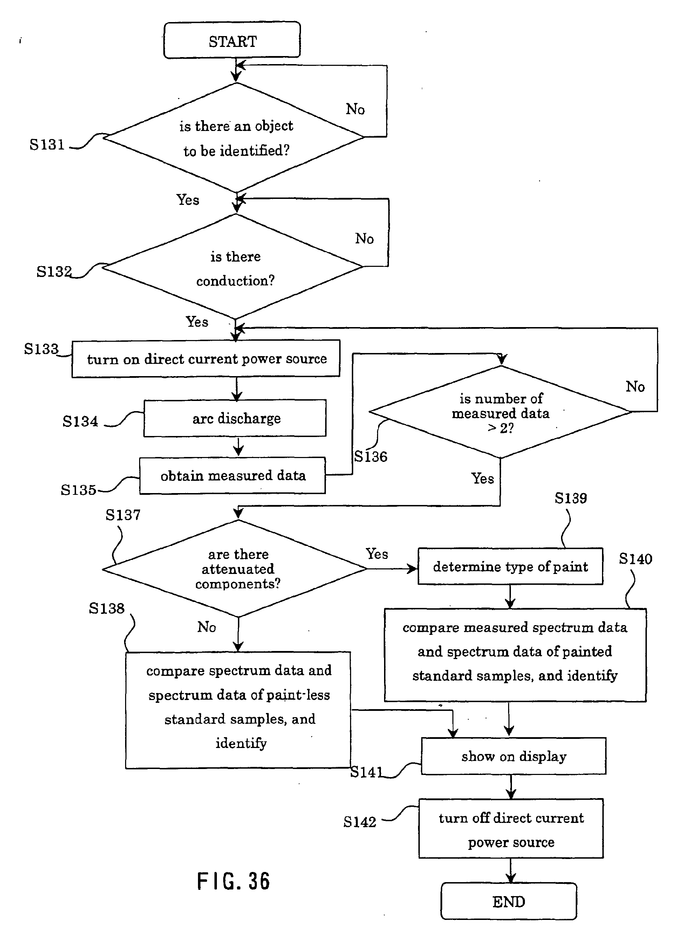

FIG. 35 is a block diagram of a metal identification device of an eleventh embodiment of the present invention. A metal identification device 10 of the eleventh embodiment of the present invention has substantially the same configuration as the metal identification device 1 described in the first embodiment, except that its identification method is different. The metal identification method of this metal identification device is described below with reference to the block diagram of FIG. 35 and the flowchart shown in FIG. 36.

In the metal identification method of the metal identification device 10 of this embodiment, first the paint on the surface of the object to be identified is determined. Like the metal identification method described in the tenth embodiment, a plurality of emission spectra measured at given time intervals are used to obtain attenuated components, and from these attenuated components the type of the paint is determined. Consequently, the process operations of the metal identification device up to obtaining attenuated components (steps S131 to S137) are the same as the process operations described in the tenth embodiment (steps S111 to S117).

Various spectrum databases corresponding to paint types are provided in the metal identification device 10. A paint-less database, a paint A database, a paint B database, and a paint C database are shown in FIG. 35 as examples of the spectrum databases. Consequently, the metal identification device 10 selects the spectrum database corresponding to the type of paint that was determined and a comparison is made with the measured spectrum data to identify the type of the metal (steps S138 and S139). Then, the results of this identification are displayed on the display (step S141) and the switch of the direct current power source 15 is turned off (step S142).

It should be noted that the metal identification devices and the metal identification methods described above in the first through eleventh embodiments are examples of the present invention, and these examples also can be combined with one another in various configurations.

As described in the foregoing, the metal identification devices and the metal identification methods of the present invention allow the type of a metal to be identified inexpensively and easily, and even if the metal has an insulating film such as a painted film on its surface, allow the metal type to be identified quickly and accurately without the object to be identified having to be disassembled. Moreover, the time that is required for identification can also be shortened.

## Claims

1. A metal identification device comprising:
a light emitting portion including a first electrode for causing a discharge between itself and an object to be identified so as to excite the object to be identified and cause it to emit light;
a light gathering portion for gathering light that has been emitted by the light emitting portion;
a spectrometry portion for measuring an emission spectrum of the light that has been gathered by the light gathering portion;
an identification processing portion for identifying the object to be identified by comparing data of the emission spectrum measured by the spectrometry portion and emission spectrum data of a plurality of standard samples stored in advance; and
a damage processing portion for damaging at least some of the surface of the object to be identified.

2. The metal identification device according to claim 1,
wherein the light emitting portion further comprises a second electrode that is provided in such a manner that it contacts the object to be identified when the object to be identified is excited and emits light, and that has a projection in its end portion.

3. The metal identification device according to claim 2,
wherein the damage processing portion is the projection of the second electrode.

4. The metal identification device according to claim 2, further comprising a conduction determination portion;
wherein the second electrode includes at least two split electrodes having projections in their end portions, and the conduction determination portion determines whether there is conduction between the split electrodes.

5. The metal identification device according to claim 2,
wherein the second electrode sets a distance between the first electrode and the object to be identified to a predetermined distance.

6. The metal identification device according to claim 1,
wherein the damage processing portion includes a defect providing member for providing a defect of a predetermined depth in at least a portion of a region of the surface of the object to be identified that is in opposition to the first electrode.

7. The metal identification device according to claim 6,
wherein the defect providing member is provided in a single unit with the light emitting portion.

8. The metal identification device according to claim 1, further comprising a needle-shaped electrode for applying a predetermined potential to the object to be identified.

9. The metal identification device according to claim 1,
wherein the light emitting portion further comprises a cover made of an insulating material that sets a distance between the first electrode and the object to be identified to a predetermined distance, and that is provided around the perimeter of the first electrode.

10. The metal identification device according to claim 1,
wherein the damage processing portion is a pulse discharge circuit that causes a pulse discharge between the first electrode and the object to be identified so as to remove at least a portion of a region of the surface of the object to be identified that is in opposition to the first electrode.

11. The metal identification device according to claim 10, further comprising a film thickness measurement portion for measuring a thickness of a film adhered to the surface of the object to be identified;
wherein an application voltage of the pulse discharge circuit is set in correspondence with the thickness of the film that has been measured by the film thickness measurement portion.

12. The metal identification device according to claim 1, further comprising:
a film thickness measurement portion for measuring a thickness of a film adhered to the surface of the object to be identified, and
a portion for controlling a distance between the first electrode and the object to be measured, for changing the distance between the first electrode and the object to be identified in correspondence with the film thickness of the film that has been measured by the film thickness measurement portion.

13. The metal identification device according to claim 12, further comprising a light gathering portion position control portion for changing a position of the light gathering portion in correspondence with the distance between the first electrode and the object to be identified that is set by the portion for controlling a distance between the first electrode and the object to be measured.

14. The metal identification device according to claim 1, further comprising:
a film thickness measurement portion for measuring a thickness of an insulating film adhered to the surface of the object to be identified, and
a portion for controlling a voltage between the first electrode and the object to be measured, for changing the voltage that is applied between the first electrode and the object to be identified in correspondence with the film thickness of the insulating film that is measured by the film thickness measurement portion.

15. The metal identification device according to claim 14, further comprising a light gathering portion position control portion for changing a position of the light gathering portion in correspondence with the voltage applied between the first electrode and the object to be identified that is set by the portion for controlling a voltage between the first electrode and the object to be measured.

16. The metal identification device according to claim 1, further comprising a cleaning portion for removing substances adhered to the first electrode.

17. The metal identification device according to claim 16,
wherein the cleaning portion further comprises an air blower for removing substances adhered to the first electrode during discharge.

18. The metal identification device according to claim 1,
wherein the identification processing portion comprises:
a standard sample data storage portion for storing emission spectrum data of the standard samples;
a measured data storage portion for storing data of the emission spectrum of the object to be identified that has been measured by the spectrometry portion; and
a comparison and determination portion for comparing data of the emission spectrum of the object to be identified and the emission spectrum data of the standard samples, so as to determine a type of metal of the object to be identified.

19. The metal identification device according to claim 18,
wherein the comparison and determination portion counts a number of matches between peak spectrum wavelengths of the emission spectrum of the object to be identified and peak spectrum wavelengths of the emission spectrum of each standard sample, and based on the results of this counting, identifies a type of metal of the object to be identified.

20. The metal identification device according to claim 19,
wherein the comparison and determination portion counts a number of matches between peak spectrum wavelengths of the emission spectrum of the object to be identified and peak spectrum wavelengths of the emission spectrum of each standard sample, determines a first standard sample with a highest number of matches, and determines that the metal of the object to be identified is the metal of the first standard sample.

21. The metal identification device according to claim 19,
wherein the comparison and determination portion counts a number of matches between peak spectrum wavelengths of the emission spectrum of the object to be identified and peak spectrum wavelengths of the emission spectrum of each standard sample, determines at least two multi-match standard samples whose number of matches is greater than other standard samples, and determines that the metal of the object to be identified is an alloy including the metals of the multi-match standard samples.

22. The metal identification device according to claim 18,
wherein the identification processing portion further comprises a correction portion that calculates a value of a difference between the peak spectrum wavelengths of the emission spectrum obtained by measuring a reference metal and the peak spectrum wavelengths of the emission spectrum data of the reference metal stored in the standard sample data storage portion, and based on the value of the difference, creates emission spectrum correction data, and
wherein the comparison and determination portion determines a type of metal of the object to be identified by comparing data of the emission spectrum of the object to be identified and the emission spectrum correction data, in place of the emission spectrum data stored in the standard sample data storage portion.

23. The metal identification device according to claim 19,
wherein data of the emission spectrum of the object to be identified, which is measured a plurality of times at given time intervals, are stored in the measured data storage portion, and
wherein the comparison and determination portion determines peak spectrum wavelengths that are attenuated over time from the plurality of data, and identifies the type of metal of the object to be identified excluding the peak spectrum wavelengths that are attenuated.

24. The metal identification device according to claim 19,
wherein data of the emission spectrum of the object to be identified, which is measured a plurality of times at given time intervals, are stored in the measured data storage portion;
wherein emission spectrum data of standard samples of different types of insulating films of the object to be identified are stored in the standard sample data storage portion; and
wherein the comparison and determination portion determines peak spectrum wavelengths that are attenuated over time from the plurality of data stored in the measured data storage portion, determines the type of insulating film of the object to be identified from the peak spectrum wavelengths that are attenuated, and identifies the type of metal of the object to be identified using the emission spectrum data of the standard sample corresponding to the type of insulating film of the object to be identified that has been determined.

25. A metal identification method for identifying a type of a metal of an object to be identified, comprising:
damaging at least a portion of a surface of the object to be identified;
exciting the object to be identified and making it emit light;
measuring the emission spectrum of the object to be identified; and
comparing data of the emission spectrum of the object to be identified and emission spectrum data of a plurality of samples stored in advance.

26. The metal identification method according to claim 25,
wherein the type of metal of the object to be identified is identified by measuring the emission spectrum of the object to be identified a plurality of times at given time intervals, determining peak spectrum wavelengths of the emission spectrum that are attenuated over time, and comparing data of the emission spectrum of the object to be identified excluding the peak spectrum wavelengths that are attenuated over time and the emission spectrum data of the plurality of standard samples stored in advance.

27. The metal identification method according to claim 25,
wherein the type of metal of the object to be identified is identified by measuring the emission spectrum of the object to be identified a plurality of times at given time intervals, determining a type of insulating film of the object to be identified from peak spectrum wavelengths of the emission spectrum that are attenuated over time, and comparing data of the emission spectrum of the object to be identified and the emission spectrum data of the plurality of standard samples stored in advance for the different insulating film types.
